# EUROPEAN PATENT APPLICATION

(11) **EP 4 785 775 A1**
(43) Date of publication of application: **05.08.2026**
(21) Application number: 24871083.2
(22) Date of filing: 29.09.2024
(51) Int. Cl.: A01D 34/73

(54) **MOWER**

(30) Priority: 28.09.2023 CN 202322663175 U
(71) Applicant: Positec Power Tools (Suzhou) Co., Ltd., Suzhou, Jiangsu 215123 (CN)
(72) Inventor: LIU, Changhua, Suzhou, Jiangsu 215123 (CN); JIAO, Shiping, Suzhou, Jiangsu 215123 (CN); WANG, Biao, Suzhou, Jiangsu 215123 (CN); LI, Xinghong, Suzhou, Jiangsu 215123 (CN); XU, Gang, Suzhou, Jiangsu 215123 (CN)
(74) Representative: Kilburn & Strode LLP
(86) International application number: PCT/CN2024/122498
(87) International publication number: WO 2025/067548

(57) **Abstract**

The present disclosure provides a lawn mower, the lawn mower comprising: a body; a movement module configured to drive the lawn mower to move; a cutting disc having at least one blade, the cutting disc rotating under driving of a cutting motor to drive the blade to rotate, the blade comprising a blade body for connecting with the cutting disc and a cutting portion connected with the blade body for performing lawn mowing work; when a travel speed is greater than or equal to 1 m/s and a linear velocity of the blade is greater than or equal to 30 m/s and less than or equal to 70 m/s, a hardness value range of the blade body is 5-45 HRC. The lawn mower reduces a risk of blade breakage by reducing a hardness of the blade body when the travel speed and the linear velocity are increased, under a premise that a thickness of the blade cannot be too thick and a length of the extending blade cannot be too small.

## Description

### TECHNICAL FIELD

The present application relates to the field of garden equipment tool technology, and particularly relates to a lawn mower.

### BACKGROUND

With an improvement of a technological level and a development of society, more and more power tools have entered people's lives, replacing people to complete many tasks, thereby reducing people's burden and bringing great convenience to people. A power tool usually includes a blade mounted on a drive shaft, and the blade is driven to rotate by the drive shaft to perform a cutting work.

However, currently, a power tool such as a lawn mower has a phenomenon of blade breakage when the blade hits a hard object such as a stone.

### SUMMARY

In view of this, a purpose of the present application is to provide a lawn mower, one purpose of which is to improve a problem of lawn mower blade breakage.

Based on the above purpose, the present application provides a lawn mower, comprising: a body; a movement module configured to drive the lawn mower to move; a cutting disc having at least one blade, the cutting disc rotating under driving of a cutting motor to drive the blade to rotate, the blade comprising: a blade body for connecting with the cutting disc, and a cutting portion connected with the blade body for performing a lawn mowing work; when a travel speed is greater than or equal to 1 m/s and a linear velocity of the blade is greater than or equal to 30 m/s and less than or equal to 70 m/s, a hardness value range of the blade body is 5-45 HRC.

In an optional implementation, when a travel speed is greater than or equal to 1.5 m/s and a linear velocity of the blade is greater than or equal to 30 m/s and less than or equal to 70 m/s, a hardness value range of the blade body is 5-45 HRC.

In an optional implementation, when a travel speed is greater than or equal to 2 m/s and a linear velocity of the blade is greater than or equal to 30 m/s and less than or equal to 70 m/s, a hardness value range of the blade body is 5-45 HRC.

In an optional implementation, when a travel speed is greater than or equal to 1 m/s and a linear velocity of the blade is greater than or equal to 40 m/s and less than or equal to 60 m/s, a hardness value range of the blade body is 10-30 HRC.

In an optional implementation, when a travel speed is greater than or equal to 1.5 m/s and a linear velocity of the blade is greater than or equal to 40 m/s and less than or equal to 60 m/s, a hardness value range of the blade body is 10-30 HRC.

In an optional implementation, when a travel speed is greater than or equal to 2 m/s and a linear velocity of the blade is greater than or equal to 40 m/s and less than or equal to 60 m/s, a hardness value range of the blade body is 10-30 HRC.

In an optional implementation, when a travel speed is greater than or equal to 1 m/s and a linear velocity of the blade is greater than or equal to 40 m/s and less than or equal to 60 m/s, a hardness value range of the blade body is 10-25 HRC.

In an optional implementation, when a travel speed is greater than or equal to 1.5 m/s and a linear velocity of the blade is greater than or equal to 40 m/s and less than or equal to 60 m/s, a hardness value range of the blade body is 10-25 HRC.

In an optional implementation, when a travel speed is greater than or equal to 2 m/s and a linear velocity of the blade is greater than or equal to 40 m/s and less than or equal to 60 m/s, a hardness value range of the blade body is 10-25 HRC.

In an optional implementation, a hardness of the cutting portion is greater than or equal to 50 HRC.

In an optional implementation, a hardness of the cutting portion is greater than or equal to 60 HRC.

In an optional implementation, a hardness of the cutting portion is less than or equal to 80 HRC.

In an optional implementation, a hardness range of the cutting portion is 60-70 HRC.

In an optional implementation, a length of the blade extending from the cutting disc is greater than or equal to 5 mm.

In an optional implementation, a length of the blade extending from the cutting disc is 5-70 mm.

In an optional implementation, a length of the blade extending from the cutting disc is 30-70 mm.

In an optional implementation, a thickness of the blade is less than or equal to 5 mm.

In an optional implementation, a thickness of the blade is 0.5-2 mm.

In an optional implementation, a width of the cutting portion is 0.1-5 mm.

In an optional implementation, a number of the at least one blade is from 3 to 6.

In an optional implementation, one end of the blade body is provided with a rotating shaft mounting hole for mounting a rotating shaft, and a hardness of the rotating shaft is greater than a hardness of the blade body.

In an optional implementation, also comprised is a dulling zone for gripping the blade body, and the dulling zone is disposed on the blade body at one end close to the rotating shaft mounting hole.

From the above description, it can be seen that the lawn mower provided by the present application reduces a risk of blade breakage by reducing a hardness of the blade body, or simultaneously improving a hardness of the blade body and a hardness of the cutting portion, when a travel speed increases and a linear velocity improves, under a premise that a blade thickness cannot be too thick and a length of the blade extending from the cutting disc cannot be too short.

### BRIEF DESCRIPTION OF THE DRAWINGS

In order to more clearly illustrate technical solutions in the present application or a related technology, the following will briefly introduce drawings needed for use in a description of embodiments or the related technology. Obviously, the drawings in the following description are only embodiments of the present application. For a person of ordinary skill in the art, other drawings can also be obtained based on these drawings without a creative labor.
FIG. 1 is a front view of a blade in an embodiment of the present application;
FIG. 2 is a cross-sectional structural schematic diagram of a part A-A in FIG. 1;
FIG. 3 is an enlarged structural schematic diagram of a part B in FIG. 2;
FIG. 4 is a structural schematic diagram of different hardness regions of a blade body and a cutting portion in an embodiment of the present application;
FIG. 5 is a structural schematic diagram of a lawn mower in an embodiment of the present application;
FIG. 6 is a schematic diagram of a blade thickness M in an embodiment of the present application;
FIG. 7 is a structural schematic diagram of a cutting disc in an embodiment of the present application; wherein 3 blades are schematically shown.

### DETAILED DESCRIPTION

To make objectives, technical solutions, and advantages of the present application clearer and more understandable, the present application will be further described in detail below in conjunction with specific embodiments and with reference to the drawings.

It should be noted that, unless otherwise defined, a technical term or a scientific term used in an embodiment of the present application should have a usual meaning understood by a person with a general skill in the field to which the present application belongs. A "first", a "second" and a similar word used in an embodiment of the present application do not indicate any order, quantity or importance, but are only used to distinguish different components. An "including" or a "comprising" and a similar word mean that an element or an object appearing before the word covers an element or an object listed after the word and an equivalent thereof, without excluding another element or object. A "connected" or a "connection" and a similar word are not limited to a physical or a mechanical connection, but may include an electrical connection, whether direct or indirect. An "upper", a "lower", a "left", a "right", etc. are only used to indicate a relative positional relationship, and when an absolute position of a described object changes, the relative positional relationship may also change accordingly.

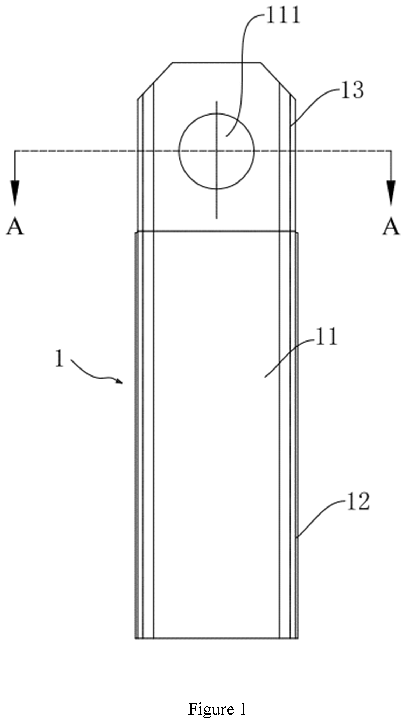

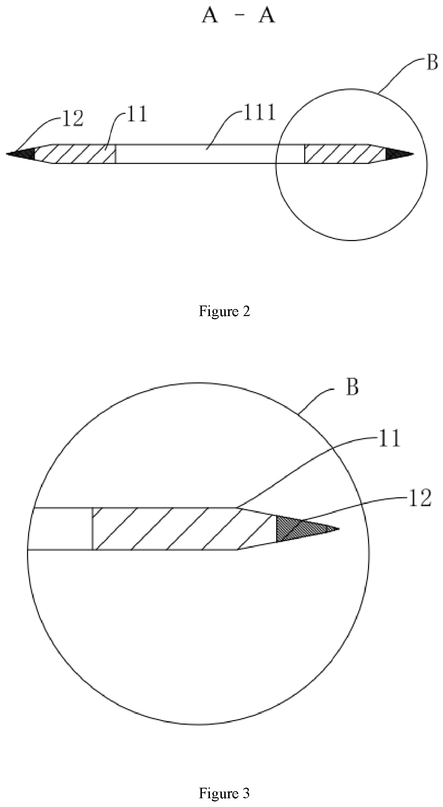

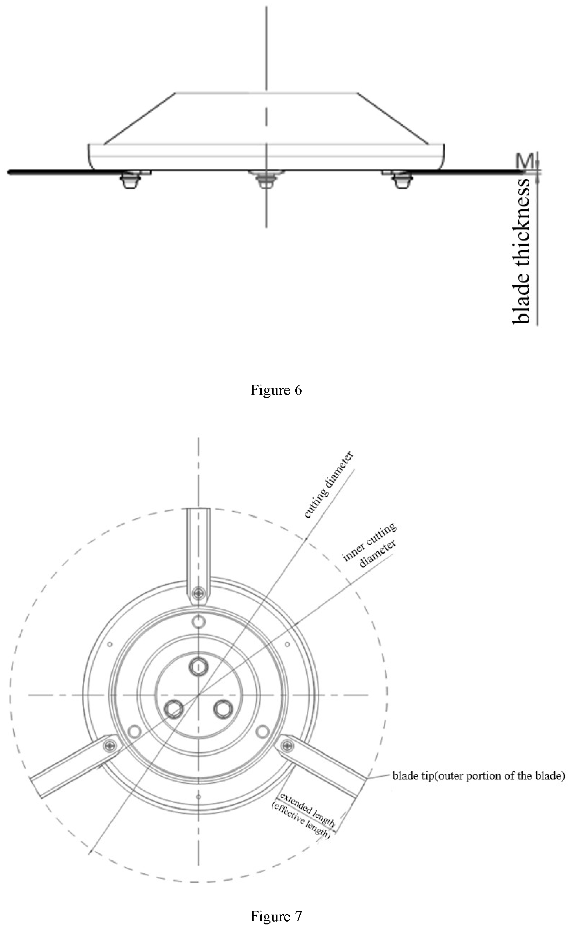

The following first provides a brief overview of the lawn mower:
Referring to FIG. 1 to FIG. 7, a lawn mower comprises: a body, a movement module, a cutting module, and a control module; the movement module and the cutting module are respectively electrically connected to the control module. Wherein, the movement module is mounted on the body, and configured to drive the lawn mower to travel, for example, to drive an automatic lawn mower to travel within a working area; specifically, the movement module includes a travel wheel and a drive motor for driving the travel wheel to travel, and an output end of the drive motor is connected to the travel wheel. The cutting module is mounted on the body, and configured to perform a lawn mowing task in the working area, for example, to cut grass in a lawn to be cut. Specifically, the cutting module includes a cutting disc and a cutting motor for driving the cutting disc to rotate, the cutting disc is provided with at least one blade, the cutting disc rotates under driving of the cutting motor, thereby driving the blade thereon to cut the grass. The control module is mounted inside the body, and used to control the movement module to drive the automatic lawn mower to move, and control the cutting module to perform a cutting task.

A power tool such as a lawn mower has a phenomenon of blade breakage when a blade hits a hard object such as a stone.

In order to reduce a risk of blade breakage, in a first aspect, a blade thickness may be increased, but considering that a manufacturing difficulty is high due to an excessively thick blade, the blade thickness should not be too thick.

It should be noted that the thicker a blade is, the harder a blade body hardness can be, but an existing process cannot achieve an excessively thick blade thickness.

In order to reduce the risk of blade breakage, in a second aspect, an effective length of a blade may be shortened, but considering that an excessively short effective length of the blade will fail to cut grass, the effective length of the blade should not be too short.

That is to say, the shorter a length of a blade extending from a cutting disc is, the less likely the blade is to break, but when the length of the blade extending from the cutting disc is too short, grass cannot be cut, and a cutting quality decreases.

With increasingly higher requirements from consumers for a lawn mower use, such as a need for a higher cutting efficiency, and the cutting efficiency being related to a travel speed of the lawn mower, in other words, the travel speed of the lawn mower affects the cutting efficiency, therefore, in order to improve the cutting efficiency, in some embodiments, the cutting efficiency may be improved by improving the travel speed, for example, increasing the travel speed to obtain the higher cutting efficiency. In some embodiments, the travel speed is greater than or equal to 0.8 m/s; in some embodiments, the travel speed is greater than or equal to 1 m/s; further, the travel speed is greater than or equal to 1.5 m/s; more further, the travel speed is greater than or equal to 2 m/s.

Generally speaking, the faster a travel speed is, the faster a linear velocity of a blade should be; a reason is that when the travel speed becomes faster, if a linear velocity before the travel speed becomes faster is used, an original cutting quality (or a cutting effect) cannot be achieved for a same lawn, therefore, in order to improve the cutting quality, the linear velocity needs to be adaptively increased. That is to say, when the travel speed becomes faster, the linear velocity needs to be adaptively increased to meet a cutting quality requirement. That is, the linear velocity is related to the travel speed. In some embodiments, the linear velocity may be increased to adapt to a faster movement speed, for example, when the travel speed is greater than or equal to 0.8 m/s, especially when the travel speed is greater than or equal to 1 m/s, the linear velocity of the blade is greater than or equal to 30 m/s; for example, when the travel speed is greater than or equal to 1 m/s, the linear velocity of the blade is greater than or equal to 34 m/s. For another example, when the travel speed is greater than or equal to 1.5 m/s, the linear velocity of the blade is greater than or equal to 40 m/s.

Considering that an excessively large linear velocity will cause a risk of a blade easily hitting a hard object and breaking to increase, therefore in some embodiments, a linear velocity of the blade is less than or equal to 70 m/s. Further, the linear velocity of the blade is less than or equal to 60 m/s. More further, the linear velocity is less than or equal to 50 m/s. Therefore, in some embodiments, when a travel speed is greater than or equal to 0.8 m/s, the linear velocity of the blade is greater than or equal to 30 m/s, and less than or equal to 70 m/s; for example, when the travel speed is equal to 1 m/s, a range of the linear velocity of the blade is 34-35 m/s.

In some embodiments, when a travel speed is greater than or equal to 1 m/s, a linear velocity of a blade is greater than or equal to 30 m/s, for example, when the travel speed is equal to 1 m/s, a range of the linear velocity of the blade is 34-35 m/s.

In some embodiments, when a travel speed is greater than or equal to 1 m/s, a linear velocity of a blade is greater than or equal to 34 m/s, and less than or equal to 60 m/s. For example, when the travel speed is equal to 1 m/s, the linear velocity of the blade is 38 m/s.

In some embodiments, when a travel speed is greater than or equal to 1.5 m/s, a linear velocity of a blade is greater than or equal to 40 m/s, and less than or equal to 60 m/s. For example, when the travel speed is 2 m/s, the linear velocity of the blade is 44 m/s-45 m/s; for another example, when the travel speed is 2 m/s, the linear velocity of the blade is 49 m/s-50 m/s.

In some embodiments, when a travel speed is greater than or equal to 2 m/s, a linear velocity of a blade is greater than or equal to 40 m/s, and less than or equal to 50 m/s. For example, when the travel speed is 2 m/s, the linear velocity of the blade is 44 m/s-45 m/s; for another example, when the travel speed is 2 m/s, the linear velocity of the blade is 49 m/s-50 m/s.

Considering that when a linear velocity increases, a risk of blade breakage increases, therefore, in order to reduce the risk of blade breakage, a hardness of a blade may be improved. That is, a problem of blade breakage caused by an increased linear velocity is addressed by improving the hardness of the blade. The improvement is particularly applicable to a lawn mower that reduces the risk of blade breakage by improving the blade, for example a hardness of a blade body, based on problems existing in the first aspect and the second aspect.

In some embodiments, when a linear velocity of a blade is greater than or equal to a set value, wherein the set value is 30m/s; on one hand, the blade can be made softer by improving a hardness of a blade body, for example, when the linear velocity of the blade is greater than or equal to 30m/s, the hardness of the blade body is controlled to be below 45HRC; that is, the hardness of the blade body is less than or equal to 45HRC. Further, when the linear velocity of the blade is greater than or equal to 30m/s, the hardness of the blade body is less than or equal to 30HRC. Further, when the linear velocity of the blade is greater than or equal to 30m/s, the hardness of the blade body is less than or equal to 25HRC.

Considering that a blade body is prone to bending when a hardness of the blade body is too small, therefore, the hardness of the blade body should not be too small, in some embodiments, when a linear velocity of a blade is greater than or equal to 30m/s, the hardness of the blade body is greater than or equal to 5HRC. Further, when the linear velocity of the blade is greater than or equal to 30m/s, the hardness of the blade body is greater than or equal to 10HRC.

From the above, it can be known that, in some embodiments, when a linear velocity of a blade is greater than or equal to 30m/s, a hardness of a blade body is greater than or equal to 5HRC, and less than or equal to 45HRC.

In some embodiments, when a linear velocity of a blade is greater than or equal to 30m/s, a hardness of a blade body is greater than or equal to 10HRC, and less than or equal to 30HRC. For example, when the linear velocity of the blade is greater than or equal to 40m/s, a hardness range of the blade body is 10-30 HRC.

In some embodiments, when a linear velocity of a blade is greater than or equal to 30m/s, a hardness of a blade body is greater than or equal to 10HRC, and less than or equal to 25HRC. For example, when the linear velocity of the blade is greater than or equal to 40m/s, a hardness range of the blade body is 10-25HRC.

Considering that an excessively large linear velocity will cause a risk of a blade easily hitting a hard object and breaking to increase, therefore in some embodiments, a linear velocity of the blade is less than or equal to 70 m/s. Further, the linear velocity of the blade is less than or equal to 60 m/s. More further, the linear velocity is less than or equal to 50 m/s.

Therefore, in some embodiments, when a linear velocity of a blade is greater than or equal to 30m/s, and less than or equal to 70 m/s, a hardness of a blade body is greater than or equal to 5HRC, and less than or equal to 45HRC. For example, when the linear velocity of the blade is 34-35m/s, the hardness of the blade body is 40 HRC.

In some embodiments, when a linear velocity of a blade is greater than or equal to 40m/s, and less than or equal to 60 m/s, a hardness of a blade body is greater than or equal to 10HRC, and less than or equal to 30HRC. For example, when the linear velocity of the blade is equal to 44m/s-45m/s, the hardness of the blade body is 20-30 HRC. For another example, when the linear velocity of the blade is equal to 49m/s -50m/s, the hardness of the blade body is 10-20 HRC.

In some embodiments, when a linear velocity of a blade is greater than or equal to 40m/s, and less than or equal to 60 m/s, a hardness of a blade body is greater than or equal to 10HRC, and less than or equal to 25HRC. For example, when the linear velocity of the blade is equal to 49m/s-50m/s, the hardness of the blade body is 10-20 HRC.

In some embodiments, when a linear velocity of a blade is greater than or equal to 40m/s, and less than or equal to 50 m/s, a hardness of a blade body is greater than or equal to 10HRC, and less than or equal to 25HRC. For example, when the linear velocity of the blade is equal to 49m/s-50m/s, the hardness of the blade body is 10-20 HRC.

Considering that a cutting portion is not wear-resistant if a hardness of the cutting portion is too low, and the cutting portion is limited by a process material if the hardness of the cutting portion is too high, in other words, the higher the hardness of the cutting portion, the more wear-resistant the cutting portion is, but a current process cannot achieve a very high hardness; in summary, in order to make the cutting portion meet a wear-resistance requirement, therefore, in some embodiments, the hardness of the cutting portion may be improved to meet the wear-resistance requirement. For example, when a linear velocity of a blade is greater than or equal to 30m/s, a hardness of the cutting portion is greater than or equal to 50HRC; further, when the linear velocity of the blade is greater than or equal to 30m/s, the hardness of the cutting portion is greater than or equal to 55HRC; for example, when the linear velocity of the blade is greater than or equal to 34m/s, the hardness of the cutting portion is greater than or equal to 55HRC. More further, when the linear velocity of the blade is greater than or equal to 30m/s, the hardness of the cutting portion is greater than or equal to 60HRC. For example, when the linear velocity of the blade is greater than or equal to 40m/s, the hardness of the cutting portion is greater than or equal to 60HRC.

Considering a current process limitation, a hardness of a cutting portion cannot be made very large, therefore, in some embodiments, when a linear velocity of a blade is greater than or equal to 30m/s, the hardness of the cutting portion is less than or equal to 80HRC. Further, when the linear velocity of the blade is greater than or equal to 30m/s, the hardness of the cutting portion is less than or equal to 75HRC. For example, when the linear velocity of the blade is greater than or equal to 34m/s, the hardness of the cutting portion is less than or equal to 75HRC. More further, when the linear velocity of the blade is greater than or equal to 30m/s, the hardness of the cutting portion is less than or equal to 70HRC. For example, when the linear velocity of the blade is greater than or equal to 40m/s, the hardness of the cutting portion is less than or equal to 70HRC.

From the above, it can be known that, in some embodiments, when a linear velocity of a blade is greater than or equal to 30m/s, a hardness of a cutting portion is greater than or equal to 50HRC, and less than or equal to 80HRC.

In some embodiments, when a linear velocity of a blade is greater than or equal to 30m/s, a hardness of a cutting portion is greater than or equal to 55HRC, and less than or equal to 75HRC.

In some embodiments, when a linear velocity of a blade is greater than or equal to 30m/s, a hardness of a cutting portion is greater than or equal to 60HRC, and less than or equal to 70HRC.

Considering that an excessively large linear velocity will cause a risk of a blade easily hitting a hard object and breaking to increase, therefore in some embodiments, a linear velocity of the blade is less than or equal to 70 m/s. Further, the linear velocity of the blade is less than or equal to 60 m/s. More further, the linear velocity is less than or equal to 50 m/s.

In some embodiments, when a linear velocity of a blade is greater than or equal to 30m/s, and less than or equal to 70 m/s, a hardness of a cutting portion is greater than or equal to 50HRC.

In some embodiments, when a linear velocity of a blade is greater than or equal to 40m/s, and less than or equal to 60 m/s, a hardness of a cutting portion is greater than or equal to 55HRC.

In some embodiments, when a linear velocity of a blade is greater than or equal to 40m/s, and less than or equal to 50 m/s, a hardness of a cutting portion is greater than or equal to 60HRC.

In summary, in some embodiments, when a linear velocity of a blade is greater than or equal to 30m/s, and less than or equal to 70 m/s, a hardness of a cutting portion is greater than or equal to 50HRC, and less than or equal to 80HRC. For example, when the linear velocity of the blade is 34-35m/s, a hardness of a blade body is 60-70 HRC.

In some embodiments, when a linear velocity of a blade is greater than or equal to 40m/s, and less than or equal to 60 m/s, a hardness of a cutting portion is greater than or equal to 55HRC, and less than or equal to 75HRC. For example, when the linear velocity of the blade is equal to 44m/s-45m/s, the hardness of the cutting portion is 60-70 HRC. For another example, when the linear velocity of the blade is equal to 49m/s -50m/s, the hardness of the cutting portion is 60-70 HRC.

In some embodiments, when a linear velocity of a blade is greater than or equal to 40m/s, and less than or equal to 50 m/s, a hardness of a cutting portion is greater than or equal to 60HRC, and less than or equal to 70HRC. For example, when the linear velocity of the blade is equal to 44m/s-45m/s, the hardness of the cutting portion is 60-70 HRC. For another example, when the linear velocity of the blade is equal to 49m/s -50m/s, the hardness of the cutting portion is 60-70 HRC.

In some embodiments, in order to meet a toughness requirement of a blade body and a wear-resistance requirement of a cutting portion, a hardness of the blade body and a hardness of the cutting portion may be improved; for example, when a linear velocity of a blade is greater than or equal to 30m/s, the hardness of the blade body is 5-45HRC, and the hardness of the cutting portion is 50 and above. For another example, when the linear velocity of the blade is greater than or equal to 30m/s, the hardness of the blade body is 10-30HRC, and the hardness of the cutting portion is 55 and above. For another example, when the linear velocity of the blade is greater than or equal to 30m/s, the hardness of the blade body is 10-25HRC, and the hardness of the cutting portion is 60 and above.

Considering a current process limitation, a hardness of a cutting portion cannot be made very large, therefore, in some embodiments, for example, when a linear velocity of a blade is greater than or equal to 30m/s, a hardness of a blade body is 5-45HRC, and the hardness of the cutting portion is 50-80HRC. For another example, when the linear velocity of the blade is greater than or equal to 30m/s, the hardness of the blade body is 10-30HRC, and the hardness of the cutting portion is 55-75 HRC. For another example, when the linear velocity of the blade is greater than or equal to 30m/s, the hardness of the blade body is 10-25HRC, and the hardness of the cutting portion is 60-70 HRC.

Considering that an excessively large linear velocity will cause a risk of a blade easily hitting a hard object and breaking to increase, therefore, in some embodiments, for example, when a linear velocity of the blade is greater than or equal to 30m/s, and less than or equal to 70 m/s, a hardness of a blade body is 5-45HRC, and a hardness of a cutting portion is 50-80HRC. When the linear velocity of the blade is greater than or equal to 30m/s, and less than or equal to 70 m/s, the hardness of the blade body is 10-30HRC, and the hardness of the cutting portion is 55-75 HRC. For another example, when the linear velocity of the blade is greater than or equal to 30m/s, and less than or equal to 70 m/s, the hardness of the blade body is 10-25HRC, and the hardness of the cutting portion is 60-70 HRC.

In summary, in some embodiments, when a linear velocity of a blade is greater than or equal to 30m/s, and less than or equal to 70 m/s, a hardness of a blade body is greater than or equal to 5HRC, and less than or equal to 45HRC; a hardness of a cutting portion is greater than or equal to 50HRC, and less than or equal to 80HRC. For example, when the linear velocity of the blade is 34-35m/s, the hardness of the blade body is 40 HRC, and the hardness of the blade body is 60-70 HRC.

In some embodiments, when a linear velocity of a blade is greater than or equal to 40m/s, and less than or equal to 60 m/s, a hardness of a blade body is greater than or equal to 10HRC, and less than or equal to 30HRC; a hardness of a cutting portion is greater than or equal to 55HRC, and less than or equal to 75HRC. For example, when the linear velocity of the blade is equal to 44m/s-45m/s, the hardness of the blade body is 20-30 HRC; the hardness of the cutting portion is 60-70 HRC. For another example, when the linear velocity of the blade is equal to 49m/s -50m/s, the hardness of the cutting portion is 60-70 HRC.

In some embodiments, when a linear velocity of a blade is greater than or equal to 40m/s, and less than or equal to 50 m/s, a hardness of a blade body is greater than or equal to 10HRC, and less than or equal to 25HRC; a hardness of a cutting portion is greater than or equal to 60HRC, and less than or equal to 70HRC. For example, when the linear velocity of the blade is equal to 49m/s -50m/s, the hardness of the blade body is 10-20 HRC; the hardness of the cutting portion is 60-70 HRC.

Considering that a lawn mower may adopt a multi-layer blade, the multi-layer blade is usually arranged in a staggered manner, a blade in a different layer has a different cutting radius (or a cutting diameter), and a linear velocity is related to the cutting radius (or the cutting diameter) of the blade, generally speaking, the multi-layer blade is usually arranged in a stepped manner, the more blade layers there are, the greater a linear velocity of an upper layer blade is, that is to say, the linear velocity of the blade is related to a number of layers of the blade, and the linear velocity of the blade affects a cutting quality, therefore, a lawn mower using the multi-layer blade has a higher requirement for a cutting efficiency and the cutting quality, in order to adapt to a cutting requirement of the multi-layer blade, in some embodiments, a (minimum) linear velocity of the multi-layer blade is greater than a linear velocity of a single-layer blade, especially for a same travel speed, a linear velocity when the lawn mower uses the multi-layer blade is greater than a linear velocity when the lawn mower uses the single-layer blade.

Therefore, in some embodiments, when a travel speed is 2m/s, for a lawn mower with a single-layer blade, a linear velocity of a blade is 44m/s-45m/s; when the travel speed is 2m/s, for a lawn mower with a multi-layer blade, the linear velocity of the blade is 49m/s-50m/s.

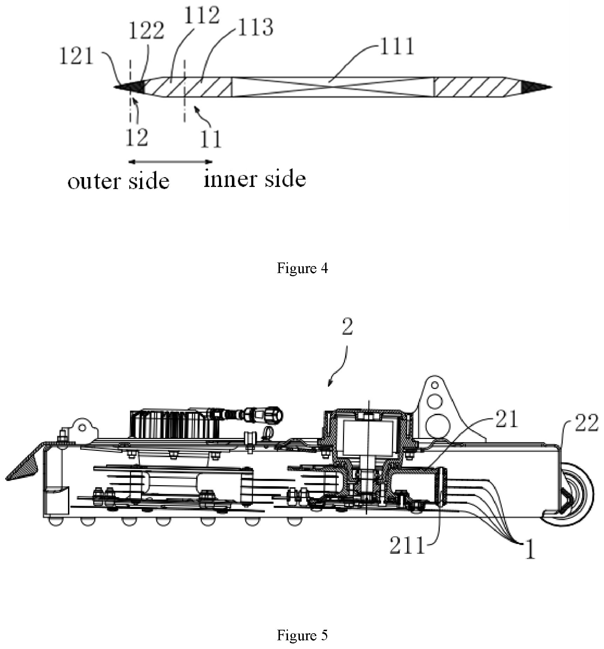

It can be understood that, as shown in FIG. 5, for a multi-layer blade, along a height direction of a lawn mower, from top to bottom, a diameter of a cutting trajectory of a blade gradually decreases, therefore, a linear velocity of the blade gradually decreases, in other words, a diameter of a cutting trajectory of a blade located above is greater than a diameter of a cutting trajectory of a blade located below, therefore, a linear velocity of the blade located above is greater than a linear velocity of the blade located below, wherein, for the multi-layer blade, the linear velocity of the blade refers to a linear velocity of a bottommost layer blade or a minimum linear velocity.

Considering that a multi-layer blade may be arranged in a staggered manner, therefore each layer has a different linear velocity, in some embodiments, in order to reduce a risk of blade breakage, a hardness of a blade (body) with a high linear velocity is less than a hardness of a blade (body) with a low linear velocity, for example, for the multi-layer blade distributed in a stepped manner in FIG. 5, from bottom to top, a linear velocity of the blade increases sequentially, therefore from bottom to top, a hardness of a blade body decreases sequentially, to reduce the risk of blade breakage.

Considering that a blade is disposed on a cutting disc, a length of the blade extending from the cutting disc (referred to as an effective length of the blade) affects a lawn mowing quality, in other words, in order to improve the lawn mowing quality, the effective length of the blade may be increased, given that when the effective length of the blade is too short, grass cannot be cut, the lawn mowing quality decreases or a lawn mowing effect is poor. Therefore, the effective length of the blade cannot be too short, for example, in some embodiments, the effective length of the blade is greater than or equal to 5 mm. Considering that for some large-volume lawn mowers, such as a commercial lawn mower, a cutting efficiency and a cutting quality requirement are high, therefore an effective length requirement of the blade is higher, therefore, in some embodiments, the effective length of the blade is greater than or equal to 30mm.

It can be understood that due to a large-volume lawn mower, such as a commercial lawn mower, a cutting efficiency requirement is also high, therefore a travel speed of the commercial lawn mower is also relatively higher (compared to a small lawn mower, such as a smart lawn mower).

Considering that a blade is prone to breakage when a length of the blade extending from a cutting disc (referred to as an effective length of the blade) is too long, therefore, the effective length of the blade cannot be too long, for example, in some embodiments, the effective length of the blade is less than or equal to 70 mm.

In summary, in some embodiments, an effective length of a blade is greater than or equal to 5 mm, and less than or equal to 70 mm. Further, the effective length of the blade is greater than or equal to 30 mm, and less than or equal to 70 mm.

And in order to adapt to an increased risk of blade breakage that a longer blade (for a lawn mower with a very high requirement for a cutting efficiency and a cutting quality) may bring, therefore, in some embodiments, a body hardness of the blade should be softer. For example, a blade body hardness when an effective length of the blade is equal to 30 mm is less than a blade body hardness when the effective length of the blade is equal to 5 mm. In other words, the longer the effective length of the blade, the smaller the body hardness of the blade.

For example, in some embodiments, when an effective length of a blade is greater than or equal to 5 mm, and less than or equal to 70 mm, a hardness of a blade body is greater than or equal to 10HRC, and less than or equal to 30HRC. And when the effective length of the blade is greater than or equal to 30 mm, and less than or equal to 70 mm, the hardness of the blade body is greater than or equal to 10HRC, and less than or equal to 25HRC.

Further considering a lawn mower with a higher cutting quality requirement, a linear velocity of a blade is relatively larger and/or an effective length of the blade is relatively larger.

Therefore, in some embodiments, when a linear velocity of a blade is greater than or equal to 40m/s, and less than or equal to 60 m/s, and an effective length of the blade is greater than or equal to 5 mm, and less than or equal to 70 mm, a hardness of a blade body is greater than or equal to 10HRC, and less than or equal to 30HRC; and when the linear velocity of the blade is greater than or equal to 40m/s, and less than or equal to 60 m/s, and the effective length of the blade is greater than or equal to 30 mm, and less than or equal to 70 mm, the hardness of the blade body is greater than or equal to 10HRC, and less than or equal to 25HRC;
For example, when a linear velocity of a blade is equal to 44m/s-45m/s, an effective length of the blade is equal to 15mm, and a hardness of a blade body is 20-30 HRC. And when the linear velocity of the blade is equal to 49m/s -50m/s, the effective length of the blade is above 30mm, and the hardness of the blade body is 10-20 HRC. For example, in an example, when the linear velocity of the blade is equal to 49m/s -50m/s, the effective length of the blade is 50mm-60mm, and the hardness of the blade body is 10-20 HRC. It should be pointed out that the effective length of the blade being 50mm-60mm is to cover a multi-layer blade, for example, an effective length of a bottommost layer blade is 50mm, and an effective length of a topmost layer blade is 60mm.

It should be pointed out that, in order to improve a lawn mowing quality or a lawn mowing effect, a multi-blade may be adopted, that is, an improvement of the lawn mowing quality is achieved through a multiple cutting. Therefore, in some embodiments, for a same blade effective length, a cutting quality of a lawn mower using the multi-blade is greater than a cutting quality of a lawn mower using a single blade. For example, an effective length of a blade is 5-6 mm, further, a number of the blade is selected as 5-6 pieces, to improve the cutting quality. For another example, the effective length of the blade is 15 mm, further, the number of the blade is selected as 5 pieces; for another example, the effective length of the blade is 50mm-60mm, taking a multi-layer blade as an example, a number of layers of the blade is 3-5 layers, an effective length of a bottommost layer blade is 50mm, an effective length of a topmost layer blade is 60mm, further, a number of blades in each layer is selected as 3-5 pieces.

It should be noted that, considering that a blade is disposed on a cutting disc, and a linear velocity of the blade is also related to an effective length of the blade, that is to say, the effective length of the blade also affects the linear velocity. For example, for a same rotation speed, the longer a length of the blade is, the greater the linear velocity of the blade is; therefore, in order to increase the linear velocity, an increase may also be achieved by increasing the effective length of the blade. Considering that grass cannot be cut when the linear velocity is too small, which in turn affects a cutting efficiency. Therefore, the effective length of the blade should not be too small, in some embodiments, the effective length of the blade is greater than 5 mm. Considering that the blade is prone to breakage when the linear velocity is too large, therefore, the effective length of the blade should not be too large, in some embodiments, the effective length of the blade is less than or equal to 70 mm. Considering that for some large-volume lawn mowers, such as a commercial lawn mower, the cutting efficiency and a cutting quality requirement are high, therefore an effective length requirement of the blade is higher, therefore the effective length cannot be too short, therefore, in some embodiments, the effective length of the blade is greater than or equal to 30mm. It can be understood that, considering that the effective length becomes longer, a blade body hardness is relatively softer.

In summary, in some embodiments, an effective length of a blade is greater than or equal to 5 mm, and less than or equal to 70 mm. Further, the effective length of the blade is greater than or equal to 30 mm, and less than or equal to 70 mm. For example, the effective length of the blade is 5-6 mm, further, a number of the blade is selected as 5-6 pieces to improve a cutting quality. For another example, the effective length of the blade is 15 mm, further, the number of the blade may be selected as 5 pieces to improve the cutting quality. For another example, the effective length of the blade is 50mm-60mm, taking a multi-layer blade as an example, a number of layers of the blade is 3-5 layers, an effective length of a bottommost layer blade is 50mm, an effective length of a topmost layer blade is 60mm, further, a number of blades in each layer is selected as 3-5 pieces.

It should be pointed out that an overall length of a blade is equal to a sum of an effective length of the blade and a blade installation length, in some embodiments the blade installation length is usually in a range of 10-15mm. Therefore, the overall length of the blade is equal to the effective length of the blade plus (10-15)mm; wherein, the blade installation length refers to, for example, a length of the blade installed on a cutting disc or a length of the blade that cannot extend from the cutting disc.

Considering that a manufacturing difficulty is high when a blade thickness is too thick, therefore, a blade should not be too thick, in some embodiments, the blade thickness is less than or equal to 5mm. Further, the blade thickness is less than or equal to 2mm. Considering that a risk of blade breakage also increases when the blade thickness is too thin, therefore, the blade should not be too thin, in some embodiments, the blade thickness is greater than or equal to 0.5mm. Further, the blade thickness is greater than or equal to 0.9 mm.

From the above, it can be known that a blade cannot be made too thin nor too thick, therefore, in some embodiments, a blade thickness is greater than or equal to 0.5mm, and less than or equal to 5mm. Further, the blade thickness is greater than or equal to 0.5mm, and less than or equal to 2mm. In some embodiments, the blade thickness is greater than or equal to 0.9 mm, and less than or equal to 5mm. Further, the blade thickness is greater than or equal to 0.9 mm, and less than or equal to 2mm.

In summary, for example, a blade thickness may be selected as 0.6mm, 0.9 mm, 1.2mm, etc.

From the above, it can be known that the present application provides a lawn mower that reduces a risk of blade breakage by reducing a hardness of a blade body, or simultaneously improving the hardness of the blade body and a hardness of a cutting portion, when a travel speed increases and a linear velocity improves, under a premise that a blade thickness cannot be too thick and a length of a blade extending from a cutting disc cannot be too short.

A lawn mower, especially a commercial lawn mower, has a fast travel speed and a high linear velocity, but a blade thickness cannot be too thick and a length of a blade extending from a cutting disc cannot be too small; therefore a blade body should be soft. For example, a lawn mower with a travel speed greater than 0.8m/S; for another example, a lawn mower with a travel speed greater than 1.5m/S, and a blade effective length of 5-70mm;

Considering a large lawn mower with a fast travel speed and a higher cutting quality and efficiency, but a blade thickness cannot be too thick, a length of a blade extending from a cutting disc cannot be too small, and a blade is longer compared to a small machine; therefore a blade body is softer, for example, a machine with a travel speed greater than 1.5m/S, and a blade length of 30-70mm.

Based on the above discussion, referring to Table 1, a parameter range of the lawn mower provided by the present application may be selected and combined from the following parameter ranges:
A parameter range of a travel speed: a range A: greater than or equal to 1m/s; a range A1 greater than or equal to 1.5m/s; a range A2 greater than or equal to 2m/s; for example: 2m/s.

A parameter range of a linear velocity (m/s): a range B is 30-70m/s; a range B1 is 40-60m/s;
A parameter range of a blade body hardness (HRC): a range E is 5-45; a range E1 is 10-30; a range E2 is 10-25;
Further, a hardness range of a blade cutting portion (HRC): a range F is greater than or equal to 50HRC; a range F1 is greater than or equal to 60HRC
Further, a parameter range of an effective length of a blade: a range C is greater than or equal to 5 mm; a range C1 is 5-70 mm; a range C2 is 30-70mm;
Further, a number range of a blade is 3-5 pieces.

It should be noted that the range E1 of a blade body hardness is applicable to a machine with a travel speed greater than 1.5m/S, and a blade length of 5-70 mm; the range E2 is applicable to a machine with a travel speed greater than 1.5m/s, and a blade length of 30-70 mm.

Further, a parameter range of a blade thickness: a range D is 0.5-5mm; a range D1 is 0.5-2mm; a range D2 is 0.9-5mm; a range D3 is 0.9-2mm.

Referring to Table 1, the present application provides four examples, namely a lawn mower of a first example, a lawn mower of a second example, a lawn mower of a third example, and a lawn mower of a fourth example;
Wherein, a lawn mower parameter in the first example is: a travel speed is greater than or equal to 1m/s, for example the travel speed is 1m/s; a linear velocity is around 34m/s; when a blade effective length is 15 mm, a hardness of a blade body is 40HRC;
Further, a hardness of a blade cutting portion is 60-70HRC.

Further, a thickness of a blade is 0.9 mm.

A lawn mower parameter in the second example is: a travel speed is greater than or equal to 1.5m/s, for example the travel speed is 2m/s; a linear velocity is around 44m/s; when a blade effective length is 15 mm, a hardness of a blade body is 20-30HRC;
Further, a hardness of a blade cutting portion is 60-70HRC.

Further, a thickness of a blade is 0.9 mm.

Further, a number of a blade is 5, to improve a cutting quality.

A lawn mower parameter in the third example is: a travel speed is greater than or equal to 1.5m/s, for example the travel speed is 2m/s; a linear velocity is around 48m/s; when a blade effective length is 50-60mm, a hardness of a blade body is 10-20HRC;
Further, a hardness of a blade cutting portion is 60-70HRC.

Further, a thickness of a blade is 1.2 mm.

Further, the blade is a multi-layer blade, an effective length of a bottommost layer blade is 50mm, and an effective length of a topmost layer blade is 60mm;
Further, a number of blades in each layer is 3, to improve a cutting quality.

A lawn mower parameter in the fourth example is: a travel speed is greater than or equal to 1m/s, for example the travel speed is 1m/s; a linear velocity is around 38m/s; when a blade effective length is 5 mm, a hardness of a blade body is 40HRC;
Further, a hardness of a blade cutting portion is 60-70HRC.

Further, a thickness of a blade is 0.6 mm.

Further, a number of a blade is 5, to improve a cutting quality.

It should be understood that when a parameter value is a range, the parameter value indicates that a parameter may be selected within the range.

Further, a blade body has a first area, a cutting portion has a second area, and an area of the blade body is greater than an area of the cutting portion.

Further, a blade body comprises at least two regions with different hardnesses.

Further, a cutting portion comprises at least two regions with different hardnesses.

Further, a number of different hardness regions of a blade body is greater than a number of different hardness regions of a cutting portion.

Referring to FIG. 4, in a preferred embodiment, a blade body 11 comprises a first hardness region 112 and a second hardness region 113, the first hardness region 112 is located on an outer side of the blade body 11, the second hardness region 113 is located on an inner side of the blade body 11, and a hardness of the first hardness region 112 is greater than a hardness of the second hardness region 113. Wherein, setting the blade body 11 as two hardness regions, a hardness of the first hardness region 112 is set to be relatively large, which is beneficial for the blade body 11 to cut grass, and a hardness of the second hardness region 113 is set to be smaller than the hardness of the first hardness region 112, which is beneficial for the first hardness region 112 to transfer an impact force received when cutting the grass to the second hardness region 113, helps the first hardness region 112 to release a force, and may effectively prevent a breakage of a blade 1.

In an embodiment, an area of a first hardness region 112 is smaller than an area of a second hardness region 113, setting an area of a less hard region to be larger improves a force-releasing effect of a harder region. In another embodiment, the area of the first hardness region 112 may also be set to be greater than or equal to the area of the second hardness region 113.

In another embodiment, a blade body 11 may also comprise another one or more regions with different hardnesses in addition to a first hardness region 112 and a second hardness region 113. Within a certain range, the more hardness regions the blade body 11 is divided into, the better a force-releasing effect for an impact force received by a blade 1. However, the more regions with different hardnesses the blade body 11 is divided into, the higher a manufacturing cost of the blade 1 is, and a different usage environment has a different requirement for a number of hardness region divisions of the blade 1, and the number of different hardness regions of the blade body 11 may be set according to a usage condition.

Please also refer to FIG. 4, in a preferred embodiment, a cutting portion 12 comprises a third hardness region 121 and a fourth hardness region 122, the third hardness region 121 is located on an outer side of the cutting portion 12, the fourth hardness region 122 is located on an inner side of the cutting portion 12, and a hardness of the third hardness region 121 is greater than a hardness of the fourth hardness region 122. Setting a hardness of the fourth hardness region 122 to be smaller than the hardness of the third hardness region 121 is beneficial for the third hardness region 121 to transfer an impact force received by the third hardness region 121 to the fourth hardness region 122, helps the third hardness region 121 to release a force, and may effectively prevent a breakage of a blade 1.

In an embodiment, an area of a third hardness region 121 is smaller than an area of a fourth hardness region 122, setting an area of a less hard region to be larger improves a force-releasing effect of a harder region. In another embodiment, the area of the third hardness region 121 may also be set to be greater than or equal to the area of the fourth hardness region 122.

In another embodiment, a cutting portion 12 may also comprise another one or more regions with different hardnesses in addition to a third hardness region 121 and a fourth hardness region 122. Within a certain range, the more hardness regions the cutting portion 12 is divided into, the better a force-releasing effect for an impact force received by a blade 1. And the more regions with different hardnesses the cutting portion 12 is divided into, the higher a manufacturing cost of the blade 1 is, and a different usage environment has a different requirement for a number of hardness region divisions of the blade 1, and the number of different hardness regions of the cutting portion 12 may be set according to a usage condition.

In an embodiment, a number of different hardness regions of a blade body 11 is greater than a number of different hardness regions of a cutting portion 12. Generally, an area of the blade body 11 is greater than an area of the cutting portion 12, making the blade body 11 more convenient than the cutting portion 12 for dividing into more regions with different hardnesses. A setting of more different hardness regions on the blade body 11 makes a force-releasing effect of a blade 1 better.

In another embodiment, a number of different hardness regions of a blade body 11 may be equal to or smaller than a number of different hardness regions of a cutting portion 12.

Please refer to FIG. 5, it should be understood that an outer side and an inner side described in the present application are based on a blade 1 as a whole, a setting direction toward an edge of the blade 1 is the outer side, and a setting direction toward an interior of the blade 1 is the inner side.

In an embodiment, a width of a cutting portion 12 may be in a range of [0.1mm, 5mm]. A setting of the width of the cutting portion 12 only needs to ensure a cutting requirement of the cutting portion 12, and ensure that the cutting portion 12 can be reliably connected with a blade body 11, so that a production cost of a blade 1 can be greatly reduced under a premise of ensuring a wear-resistant strength of the blade 1. Specifically, the width of the cutting portion may be 0.1mm, 1mm, 2mm or 5mm, etc.

In an embodiment, a blade 1 is made from a single piece of a plate material, and by performing a different degree of a hardening treatment such as a laser quenching, an edge carburizing or an induction hardening on a blade body 11 and a cutting portion 12, the blade body 11 and the cutting portion 12 each having a different hardness region are obtained, to meet a high toughness requirement of the blade body 11 while meeting a high wear-resistance usage requirement of the cutting portion 12.

In some embodiments, on a single piece of a plate material, a blade 1 may have a metal grain of a blade body 11 made more dense through a tempering treatment, making an impact resistance performance of the blade body 11 better; a cutting portion is hardened by adopting a laser quenching process on an edge, thereby obtaining the blade 1 with a hardness of the cutting portion higher than a hardness of the blade body 11. Of course, in other embodiments, the laser quenching may also be replaced by another process method, such as an edge carburizing, an induction hardening, etc.

In another embodiment, a blade body 11 may be set as an integral body having a different hardness region, a cutting portion 12 may be set as a plurality of components having a different hardness, and the plurality of components of a different hardness material of the cutting portion 12 are fixedly connected and then connected with the blade body 11. Such a design helps a force release inside a blade 1. In another embodiment, the blade body 11 may also be set as a plurality of components having a different hardness, the cutting portion 12 may be set as an integral body having a different hardness region, and the plurality of components of a different hardness of the blade body 11 are fixedly connected and then connected with a blade body 11. Such a design also helps the force release inside the blade 1.

In another embodiment, a different hardness region of a blade body 11 is made of a different material, and a different hardness region of a cutting portion 12 is also made of a different material. The blade body 11 and the cutting portion 12 may be directly formed as an integral body during a molding, forming a plurality of connected components with a different hardness. In addition, the cutting portion 12 and the blade body 11 may also be formed separately, forming a plurality of components with a different hardness, and then the plurality of components with a different hardness are fixedly connected together. In this embodiment, the plurality of components of a different hardness of the cutting portion 12 and the plurality of components of a different hardness of the blade body 11 are formed separately, and then the plurality of components are fixedly connected together through a welding or another method.

It should be noted that a component of a different hardness of a cutting portion is connected into an integral body, and a plurality of components of a different hardness of a blade body are connected into an integral body; finally the cutting portion connected as an integral body and the blade body connected as an integral body are connected, and an above connection method may adopt a same method, such as a welding, an adhesive connection, a self-locking fastener connection, etc., which is not be described in detail in this embodiment. Of course, in other embodiments, the above connection method may also adopt a different connection method, in other words, among a connection method of a component of a different hardness of the cutting portion, a connection method of a plurality of components of a different hardness of the blade body, and a connection method of the cutting portion connected as an integral body and the blade body connected as an integral body, at least two different connection methods exist among these three connection methods; for example, A when there are two connection methods, 1) the connection method of the component of a different hardness of the cutting portion and the connection method of the plurality of components of a different hardness of the blade body adopt a first connection method, and a connection method between the cutting portion and the blade body is different from the connection method of the component of a different hardness of the cutting portion, that is to say, the connection method of the cutting portion and the blade body adopts a second connection method, and the second connection method is different from the first connection method; 2) the connection method of the component of a different hardness of the cutting portion, and the connection method of the cutting portion and the blade body adopt a first connection method, and the connection method of the plurality of components of a different hardness of the blade body is different from the connection method of the component of a different hardness of the cutting portion, that is to say, the connection method of the plurality of components of a different hardness of the blade body adopts a second connection method, and the second connection method is different from the first connection method; 3) the connection method of the component of a different hardness of the cutting portion adopts a first connection method, and the connection method of the cutting portion and the blade body, and the connection method of the plurality of components of a different hardness of the blade body adopt a method different from the connection method of the component of a different hardness of the cutting portion, that is to say, the connection method of the plurality of components of a different hardness of the blade body, and the connection method of the cutting portion and the blade body both adopt a second connection method, and the second connection method is different from the first connection method. The above first connection method adopts, for example, a welding, and the second connection method adopts, for example, an adhesive connection or a self-locking fastener connection; or, the first connection method adopts, for example, an adhesive connection, and the second connection method adopts, for example, a welding or a self-locking fastener connection; or, the first connection method adopts, for example, a self-locking fastener connection, and the second connection method adopts, for example, a welding or an adhesive connection.

When there are three connection methods, that is, a connection method of a component of a different hardness of a cutting portion is different from a connection method of a plurality of components of a different hardness of a blade body, the connection method of the plurality of components of a different hardness of the blade body is different from a connection method between the cutting portion and the blade body, and the connection method between the cutting portion and the blade body is different from the connection method of the component of a different hardness of the cutting portion, that is to say, the connection method of the component of a different hardness of the cutting portion adopts a first connection method, the connection method of the plurality of components of a different hardness of the blade body adopts a second connection method, the connection method between the cutting portion and the blade body adopts a third connection method, and the three connection methods are all different. For example, the first connection method adopts, for example, a welding, the second connection method adopts one of an adhesive connection and a self-locking fastener connection, and the third connection method adopts another one of the adhesive connection and the self-locking fastener connection; for another example, the first connection method adopts an adhesive connection, the second connection method adopts one of a welding and a self-locking fastener connection, and the third connection method adopts another one of the welding and the self-locking fastener connection; for another example, the first connection method adopts a self-locking fastener connection, the second connection method adopts one of a welding and an adhesive connection, and the third connection method adopts another one of the welding and the adhesive connection;
A connection between a cutting portion and a blade body adopts a welding, and a connection of a component of a different hardness of the cutting portion (and/or the blade body) adopts an adhesive (or a self-locking fastener) connection

2) A connection between a cutting portion and a blade body adopts a welding, and a connection of a component of a different hardness of the cutting portion (and/or the blade body) adopts an adhesive (or a self-locking fastener) connection
As shown in FIG. 5, in an embodiment, one end of a blade body 11 is provided with a rotating shaft mounting hole 111 for mounting a rotating shaft 211, and a hardness of the rotating shaft 211 is greater than a hardness of the blade body 11. This can reduce a wear of the rotating shaft 211, and during a long-term use, can reduce a wear between the rotating shaft 211 and the blade body 11, thereby reducing a frequency of a blade 1 replacement. Generally, since a cutting portion 12 has a significant wear during a cutting operation, before the cutting portion 12 wears out and cannot work, a replacement of the blade 1 due solely to the wear between the rotating shaft 211 and the blade body 11 basically does not occur.

As shown in FIG. 1, in an embodiment, a blade 1 of the present application further comprises a dulling zone 13 for gripping a blade body 11, and the dulling zone 13 is disposed on the blade body 11 at one end close to a rotating shaft mounting hole 111. The dulling zone 13 is not provided with a cutting edge like a cutting portion 12, in order to facilitate an operator to hold the dulling zone 13 for a replacement or a maintenance of the blade 1.

Of course, in other embodiments, an achievement may also be made by increasing a difference in hardness between a blade body and a cutting portion, for example, a hardness of the cutting portion is greater than a hardness of the blade body, and a difference between the hardness of the cutting portion and the hardness of the blade body is greater than or equal to 40 HRC, and less than or equal to 80HRC.

### Table 1

Remark: A meaning of "around" after a numerical value in the table and the above text can be understood as a measurement error, which is related to a measurement accuracy. For example, the measurement error is within ±5 (for example ±4, or ±3, or even ±1).

A power tool such as a lawn mower has a phenomenon of blade breakage when a blade hits a hard object such as a stone.

In order to improve a cutting quality, a linear velocity of a lawn mower usually needs to be increased or raised, for example, to adapt to a cutting quality requirement for an increased linear velocity caused by a faster travel speed, and of course, a cutting quality requirement of the lawn mower where the linear velocity needs to be adaptively increased due to another factor (such as a larger blade size, a multi-layer blade) can also be adapted.

However, when a linear velocity increases, a risk of blade breakage increases, therefore, how to reduce a blade breakage problem caused by the increased linear velocity has become one of urgent issues to be solved for a lawn mower, especially a large lawn mower in a commercial scenario (such as a riding lawn mower).

An applicant found that while a linear velocity increases, in order to reduce a risk of blade breakage, in a first aspect, a blade thickness may be increased, but considering that a manufacturing difficulty is high due to an excessively thick blade, the blade thickness should not be too thick.

It should be noted that the thicker a blade is, the harder a blade body hardness can be, but an existing process cannot achieve an excessively thick blade thickness.

In a second aspect, an effective length of a blade may be shortened, but considering that grass cannot be cut when the effective length of the blade is too short, the effective length of the blade should not be too short.

That is to say, the shorter a length of a blade extending from a cutting disc is, the less likely the blade is to break, but when the length of the blade extending from the cutting disc is too short, grass cannot be cut, and a cutting quality decreases.

In a third aspect, a hardness of a blade may be addressed by improving a blade body, for example, making the blade body soft, that is, reducing a hardness of the blade body so that the blade body has a better toughness; or simultaneously improving a hardness of the blade body and a hardness of a cutting portion, for example, reducing the hardness of the blade body and increasing the hardness of the cutting portion, so that the blade can meet both a toughness and a wear-resistance requirement.

It should be pointed out that in other embodiments, a force of a cutting portion may also be released to a blade body by increasing a difference in hardness between the blade body and the cutting portion.

However, the applicant considered problems existing in solving a blade breakage through the first aspect and the second aspect, therefore, the applicant mainly addresses a blade breakage problem caused by an increased linear velocity through the third aspect.

That is to say, the present application, given that when a linear velocity increases, but a blade thickness cannot be too thick and a length of a blade extending from a cutting disc cannot be too short, reduces a risk of blade breakage by reducing a hardness of a blade body. It should be pointed out that in other embodiments, when the linear velocity increases, the risk of blade breakage may also be reduced by increasing a difference in hardness between the blade body and a cutting portion.

The following provides a detailed description of a requirement for a blade body hardness, a requirement for a cutting portion hardness, or a requirement for a hardness of the blade body and the cutting portion when a blade linear velocity increases:
In some embodiments, when a linear velocity of a blade is greater than or equal to a set value, wherein the set value is 30m/s; on one hand, a hardness of the blade may be made softer by controlling a hardness of a blade body, for example, when the linear velocity of the blade is greater than or equal to 30m/s, the hardness of the blade body is controlled to be below 45HRC; that is, the hardness of the blade body is less than or equal to 45HRC. Further, when the linear velocity of the blade is greater than or equal to 30m/s, the hardness of the blade body is less than or equal to 30HRC. Further, when the linear velocity of the blade is greater than or equal to 30m/s, the hardness of the blade body is less than or equal to 25HRC.

Considering that a blade body is prone to bending when a hardness of the blade body is too small, therefore, the hardness of the blade body should not be too small, in some embodiments, when a linear velocity of a blade is greater than or equal to 30m/s, the hardness of the blade body is greater than or equal to 5HRC. Further, when the linear velocity of the blade is greater than or equal to 30m/s, the hardness of the blade body is greater than or equal to 10HRC.

From the above, it can be known that, in some embodiments, when a linear velocity of a blade is greater than or equal to 30m/s, a hardness of a blade body is greater than or equal to 5HRC, and less than or equal to 45HRC

In some embodiments, when a linear velocity of a blade is greater than or equal to 30m/s, a hardness of a blade body is greater than or equal to 10HRC, and less than or equal to 30HRC. For example, when the linear velocity of the blade is greater than or equal to 40m/s, a hardness range of the blade body is 10-30 HRC.

In some embodiments, when a linear velocity of a blade is greater than or equal to 30m/s, a hardness of a blade body is greater than or equal to 10HRC, and less than or equal to 25HRC. For example, when the linear velocity of the blade is greater than or equal to 40m/s, a hardness range of the blade body is 10-25HRC.

Considering that an excessively large linear velocity will cause a risk of a blade easily hitting a hard object and breaking to increase, therefore in some embodiments, a linear velocity of the blade is less than or equal to 70 m/s. Further, the linear velocity of the blade is less than or equal to 60 m/s. More further, the linear velocity is less than or equal to 50 m/s.

Therefore, in some embodiments, when a linear velocity of a blade is greater than or equal to 30m/s, and less than or equal to 70 m/s, a hardness of a blade body is greater than or equal to 5HRC, and less than or equal to 45HRC. For example, when the linear velocity of the blade is 34-35m/s, the hardness of the blade body is 40 HRC.

In some embodiments, when a linear velocity of a blade is greater than or equal to 40m/s, and less than or equal to 60 m/s, a hardness of a blade body is greater than or equal to 10HRC, and less than or equal to 30HRC. For example, when the linear velocity of the blade is equal to 44m/s-45m/s, the hardness of the blade body is 20-30 HRC. For another example, when the linear velocity of the blade is equal to 49m/s -50m/s, the hardness of the blade body is 10-20 HRC.

In some embodiments, when a linear velocity of a blade is greater than or equal to 40m/s, and less than or equal to 60 m/s, a hardness of a blade body is greater than or equal to 10HRC, and less than or equal to 25HRC. For example, when the linear velocity of the blade is equal to 49m/s-50m/s, the hardness of the blade body is 10-20 HRC.

In some embodiments, when a linear velocity of a blade is greater than or equal to 40m/s, and less than or equal to 50 m/s, a hardness of a blade body is greater than or equal to 10HRC, and less than or equal to 25HRC. For example, when the linear velocity of the blade is equal to 49m/s-50m/s, the hardness of the blade body is 10-20 HRC.

Considering that a cutting portion is not wear-resistant if a hardness of the cutting portion is too low, and the cutting portion is limited by a process material if the hardness of the cutting portion is too high, in other words, the higher the hardness of the cutting portion, the more wear-resistant the cutting portion is, but a current process cannot achieve a very high hardness; in summary, in order to make the cutting portion meet a wear-resistance requirement, therefore, in some embodiments, the hardness of the cutting portion may be controlled to meet the wear-resistance requirement. For example, when a linear velocity of a blade is greater than or equal to 30m/s, a hardness of the cutting portion is greater than or equal to 50HRC; further, when the linear velocity of the blade is greater than or equal to 30m/s, the hardness of the cutting portion is greater than or equal to 55HRC; for example, when the linear velocity of the blade is greater than or equal to 34m/s, the hardness of the cutting portion is greater than or equal to 55HRC. More further, when the linear velocity of the blade is greater than or equal to 30m/s, the hardness of the cutting portion is greater than or equal to 60HRC. For example, when the linear velocity of the blade is greater than or equal to 40m/s, the hardness of the cutting portion is greater than or equal to 60HRC.

Considering a current process limitation, a hardness of a cutting portion cannot be made very large, therefore, in some embodiments, when a linear velocity of a blade is greater than or equal to 30m/s, the hardness of the cutting portion is less than or equal to 80HRC. Further, when the linear velocity of the blade is greater than or equal to 30m/s, the hardness of the cutting portion is less than or equal to 75HRC. For example, when the linear velocity of the blade is greater than or equal to 34m/s, the hardness of the cutting portion is less than or equal to 75HRC. More further, when the linear velocity of the blade is greater than or equal to 30m/s, the hardness of the cutting portion is less than or equal to 70HRC. For example, when the linear velocity of the blade is greater than or equal to 40m/s, the hardness of the cutting portion is less than or equal to 70HRC.

From the above, it can be known that, in some embodiments, when a linear velocity of a blade is greater than or equal to 30m/s, a hardness of a cutting portion is greater than or equal to 50HRC, and less than or equal to 80HRC.

In some embodiments, when a linear velocity of a blade is greater than or equal to 30m/s, a hardness of a cutting portion is greater than or equal to 55HRC, and less than or equal to 75HRC.

In some embodiments, when a linear velocity of a blade is greater than or equal to 30m/s, a hardness of a cutting portion is greater than or equal to 60HRC, and less than or equal to 70HRC.

Considering that an excessively large linear velocity will cause a risk of a blade easily hitting a hard object and breaking to increase, therefore in some embodiments, a linear velocity of the blade is less than or equal to 70 m/s. Further, the linear velocity of the blade is less than or equal to 60 m/s. More further, the linear velocity is less than or equal to 50 m/s.

In some embodiments, when a linear velocity of a blade is greater than or equal to 30m/s, and less than or equal to 70 m/s, a hardness of a cutting portion is greater than or equal to 50HRC.

In some embodiments, when a linear velocity of a blade is greater than or equal to 40m/s, and less than or equal to 60 m/s, a hardness of a cutting portion is greater than or equal to 55HRC.

In some embodiments, when a linear velocity of a blade is greater than or equal to 40m/s, and less than or equal to 50 m/s, a hardness of a cutting portion is greater than or equal to 60HRC.

In summary, in some embodiments, when a linear velocity of a blade is greater than or equal to 30m/s, and less than or equal to 70 m/s, a hardness of a cutting portion is greater than or equal to 50HRC, and less than or equal to 80HRC. For example, when the linear velocity of the blade is 34-35m/s, a hardness of a blade body is 60-70 HRC.

In some embodiments, when a linear velocity of a blade is greater than or equal to 40m/s, and less than or equal to 60 m/s, a hardness of a cutting portion is greater than or equal to 55HRC, and less than or equal to 75HRC. For example, when the linear velocity of the blade is equal to 44m/s-45m/s, the hardness of the cutting portion is 60-70 HRC. For another example, when the linear velocity of the blade is equal to 49m/s -50m/s, the hardness of the cutting portion is 60-70 HRC.

In some embodiments, when a linear velocity of a blade is greater than or equal to 40m/s, and less than or equal to 50 m/s, a hardness of a cutting portion is greater than or equal to 60HRC, and less than or equal to 70HRC. For example, when the linear velocity of the blade is equal to 44m/s-45m/s, the hardness of the cutting portion is 60-70 HRC. For another example, when the linear velocity of the blade is equal to 49m/s -50m/s, the hardness of the cutting portion is 60-70 HRC.

In some embodiments, in order to meet a toughness requirement of a blade body and a wear-resistance requirement of a cutting portion, a hardness of the blade body and a hardness of the cutting portion may be simultaneously improved; for example, when a linear velocity of a blade is greater than or equal to 30m/s, the hardness of the blade body is 5-45HRC, and the hardness of the cutting portion is 50 and above. For another example, when the linear velocity of the blade is greater than or equal to 30m/s, the hardness of the blade body is 10-30HRC, and the hardness of the cutting portion is 55 and above. For another example, when the linear velocity of the blade is greater than or equal to 30m/s, the hardness of the blade body is 10-25HRC, and the hardness of the cutting portion is 60 and above.

Considering a current process limitation, a hardness of a cutting portion cannot be made very large, therefore, in some embodiments, for example, when a linear velocity of a blade is greater than or equal to 30m/s, a hardness of a blade body is 5-45HRC, and the hardness of the cutting portion is 50-80HRC. For another example, when the linear velocity of the blade is greater than or equal to 30m/s, the hardness of the blade body is 10-30HRC, and the hardness of the cutting portion is 55-75 HRC. For another example, when the linear velocity of the blade is greater than or equal to 30m/s, the hardness of the blade body is 10-25HRC, and the hardness of the cutting portion is 60-70 HRC.

Considering that an excessively large linear velocity will cause a risk of a blade easily hitting a hard object and breaking to increase, therefore, in some embodiments, for example, when a linear velocity of the blade is greater than or equal to 30m/s, and less than or equal to 70 m/s, a hardness of a blade body is 5-45HRC, and a hardness of a cutting portion is 50-80HRC. When the linear velocity of the blade is greater than or equal to 30m/s, and less than or equal to 70 m/s, the hardness of the blade body is 10-30HRC, and the hardness of the cutting portion is 55-75 HRC. For another example, when the linear velocity of the blade is greater than or equal to 30m/s, and less than or equal to 70 m/s, the hardness of the blade body is 10-25HRC, and the hardness of the cutting portion is 60-70 HRC.

In summary, in some embodiments, when a linear velocity of a blade is greater than or equal to 30m/s, and less than or equal to 70 m/s, a hardness of a blade body is greater than or equal to 5HRC, and less than or equal to 45HRC; a hardness of a cutting portion is greater than or equal to 50HRC, and less than or equal to 80HRC. For example, when the linear velocity of the blade is 34-35m/s, the hardness of the blade body is 40 HRC, and the hardness of the blade body is 60-70 HRC.

In some embodiments, when a linear velocity of a blade is greater than or equal to 40m/s, and less than or equal to 60 m/s, a hardness of a blade body is greater than or equal to 10HRC, and less than or equal to 30HRC; a hardness of a cutting portion is greater than or equal to 55HRC, and less than or equal to 75HRC. For example, when the linear velocity of the blade is equal to 44m/s-45m/s, the hardness of the blade body is 20-30 HRC; the hardness of the cutting portion is 60-70 HRC. For another example, when the linear velocity of the blade is equal to 49m/s -50m/s, the hardness of the cutting portion is 60-70 HRC.

In some embodiments, when a linear velocity of a blade is greater than or equal to 40m/s, and less than or equal to 50 m/s, a hardness of a blade body is greater than or equal to 10HRC, and less than or equal to 25HRC; a hardness of a cutting portion is greater than or equal to 60HRC, and less than or equal to 70HRC. For example, when the linear velocity of the blade is equal to 49m/s -50m/s, the hardness of the blade body is 10-20 HRC; the hardness of the cutting portion is 60-70 HRC.

Considering that a lawn mower may adopt a multi-layer blade, the multi-layer blade is usually arranged in a staggered manner, a blade in a different layer has a different cutting radius (or a cutting diameter), and a linear velocity is related to the cutting radius (or the cutting diameter) of the blade, generally speaking, the multi-layer blade is usually arranged in a stepped manner, the more blade layers there are, the greater a linear velocity of an upper layer blade is, that is to say, the linear velocity of the blade is related to a number of layers of the blade, and the linear velocity of the blade affects a cutting quality, therefore, a lawn mower using the multi-layer blade has a higher requirement for a cutting efficiency and the cutting quality, in order to adapt to a cutting requirement of the multi-layer blade, in some embodiments, a (minimum) linear velocity of the multi-layer blade is greater than a linear velocity of a single-layer blade, especially when another parameter is the same, for example when a travel speed is the same and/or a blade thickness is the same, a linear velocity when the lawn mower uses the multi-layer blade is greater than a linear velocity when the lawn mower uses the single-layer blade.

Therefore, in some embodiments, when a travel speed is 2m/s, for a lawn mower with a single-layer blade, a linear velocity of a blade is 44m/s-45m/s; when the travel speed is 2m/s, for a lawn mower with a multi-layer blade, the linear velocity of the blade is 49m/s-50m/s.

It can be understood that, as shown in FIG. 5, for a multi-layer blade, along a height direction of a lawn mower, from top to bottom, a diameter of a cutting trajectory of a blade gradually decreases, therefore, a linear velocity of the blade gradually decreases, in other words, a diameter of a cutting trajectory of a blade located above is greater than a diameter of a cutting trajectory of a blade located below, therefore, a linear velocity of the blade located above is greater than a linear velocity of the blade located below, wherein, for the multi-layer blade, the linear velocity of the blade refers to a linear velocity of a bottommost layer blade or a minimum linear velocity.

Considering that a multi-layer blade may be arranged in a staggered manner, therefore each layer has a different linear velocity, in some embodiments, in order to reduce a risk of blade breakage, a hardness of a blade (body) with a high linear velocity is less than a hardness of a blade (body) with a low linear velocity, for example, for the multi-layer blade distributed in a stepped manner in FIG. 5, from bottom to top, a linear velocity of the blade increases sequentially, therefore from bottom to top, a hardness of a blade body decreases sequentially, to reduce the risk of blade breakage.

Considering that a blade is disposed on a cutting disc, a length of the blade extending from the cutting disc (referred to as an effective length of the blade) affects a lawn mowing efficiency, in other words, in order to improve the lawn mowing efficiency, the effective length of the blade may be increased, when the effective length of the blade is too short, grass cannot be cut, a lawn mowing quality decreases or a lawn mowing effect is poor. Therefore, the effective length of the blade cannot be too short, for example, in some embodiments, the effective length of the blade is greater than or equal to 5 mm. Considering that for some large-volume lawn mowers, such as a commercial lawn mower, a cutting efficiency and a cutting quality requirement are high, therefore an effective length requirement of the blade is higher, therefore, in some embodiments, the effective length of the blade is greater than or equal to 30mm.

Considering that a blade is prone to breakage when a length of the blade extending from a cutting disc (referred to as an effective length of the blade) is too long, therefore, the effective length of the blade cannot be too long, for example, in some embodiments, the effective length of the blade is less than or equal to 70 mm.

In summary, in some embodiments, an effective length of a blade is greater than or equal to 5 mm, and less than or equal to 70 mm. Further, the effective length of the blade is greater than or equal to 30 mm, and less than or equal to 70 mm.

It should be pointed out that, in order to improve a lawn mowing quality or a lawn mowing effect, a multi-blade may be adopted, that is, an improvement of the lawn mowing quality is achieved through a multiple cutting. Therefore, in some embodiments, for a same blade effective length, a cutting quality of a lawn mower using the multi-blade is greater than a cutting quality of a lawn mower using a single blade. For example, an effective length of a blade is 5-6 mm, further, a number of the blade is selected as 5-6 pieces, to improve the cutting quality. For another example, the effective length of the blade is 15 mm, further, the number of the blade is selected as 5 pieces; for another example, the effective length of the blade is 50mm-60mm, taking a multi-layer blade as an example, a number of layers of the blade is 3-5 layers, an effective length of a bottommost layer blade is 50mm, an effective length of a topmost layer blade is 60mm, further, a number of blades in each layer is selected as 3-5 pieces.

It should be noted that, considering that a blade is disposed on a cutting disc, and a linear velocity of the blade is also related to an effective length of the blade, that is to say, the effective length of the blade also affects the linear velocity. For example, for a same rotation speed, the longer the effective length of the blade is, the greater the linear velocity of the blade is; therefore, in order to increase the linear velocity, an increase may also be achieved by increasing the effective length of the blade. Considering that grass cannot be cut when the linear velocity is too small, which in turn affects a cutting efficiency. Therefore, the effective length of the blade should not be too small, in some embodiments, the effective length of the blade is greater than 5 mm. Considering that the blade is prone to breakage when the linear velocity is too large, therefore, the effective length of the blade should not be too large, in some embodiments, the effective length of the blade is less than or equal to 70 mm. Considering that for some large-volume lawn mowers, such as a commercial lawn mower, the cutting efficiency and a cutting quality requirement are high, therefore an effective length requirement of the blade is higher, therefore the effective length cannot be too short, therefore, in some embodiments, the effective length of the blade is greater than or equal to 30mm. It can be understood that, considering that the effective length becomes longer, a blade body hardness is relatively softer.

In summary, in some embodiments, an effective length of a blade is greater than or equal to 5 mm, and less than or equal to 70 mm. Further, the effective length of the blade is greater than or equal to 30 mm, and less than or equal to 70 mm. For example, the effective length of the blade is 5-6 mm, further, a number of the blade is selected as 5-6 pieces to improve a cutting quality. For another example, the effective length of the blade is 15 mm, further, the number of the blade may be selected as 5 pieces to improve the cutting quality. For another example, the effective length of the blade is 50mm-60mm, taking a multi-layer blade as an example, a number of layers of the blade is 3-5 layers, an effective length of a bottommost layer blade is 50mm, an effective length of a topmost layer blade is 60mm, further, a number of blades in each layer is selected as 3-5 pieces.

And in order to adapt to an increased risk of blade breakage that a longer blade (for a lawn mower with a very high requirement for a cutting efficiency and a cutting quality) may bring, therefore, in some embodiments, a body hardness of the blade should be softer. For example, a blade body hardness when an effective length of the blade is equal to 30 mm is less than a blade body hardness when the effective length of the blade is equal to 5 mm. In other words, the longer the effective length of the blade, the smaller the body hardness of the blade.

For example, in some embodiments, when an effective length of a blade is greater than or equal to 5 mm, and less than or equal to 70 mm, a hardness of a blade body is greater than or equal to 10HRC, and less than or equal to 30HRC. And when the effective length of the blade is greater than or equal to 30 mm, and less than or equal to 70 mm, the hardness of the blade body is greater than or equal to 10HRC, and less than or equal to 25HRC.

Further considering a lawn mower with a higher cutting quality requirement, a linear velocity of a blade is relatively larger and/or an effective length of the blade is relatively larger.

Therefore, in some embodiments, when a linear velocity of a blade is greater than or equal to 40m/s, and less than or equal to 60 m/s, and an effective length of the blade is greater than or equal to 5 mm, and less than or equal to 70 mm, a hardness of a blade body is greater than or equal to 10HRC, and less than or equal to 30HRC; and when the linear velocity of the blade is greater than or equal to 40m/s, and less than or equal to 60 m/s, and the effective length of the blade is greater than or equal to 30 mm, and less than or equal to 70 mm, the hardness of the blade body is greater than or equal to 10HRC, and less than or equal to 25HRC;

For example, when a linear velocity of a blade is equal to 44m/s-45m/s, an effective length of the blade is equal to 15mm, and a hardness of a blade body is 20-30 HRC. And when the linear velocity of the blade is equal to 49m/s -50m/s, an effective length of the blade is above 30mm, and the hardness of the blade body is 10-20 HRC. For example, in an example, when the linear velocity of the blade is equal to 49m/s -50m/s, the effective length of the blade is 50mm-60mm, and the hardness of the blade body is 10-20 HRC. It should be pointed out that the effective length of the blade being 50mm-60mm is to cover a multi-layer blade, for example, an effective length of a bottommost layer blade is 50mm, and an effective length of a topmost layer blade is 60mm.

It should be pointed out that an overall length of a blade is equal to a sum of an effective length of the blade and a blade installation length, in some embodiments the blade installation length is usually in a range of 10-15mm. Therefore, the overall length of the blade is equal to the effective length of the blade plus (10-15)mm; wherein, the blade installation length refers to, for example, a length of the blade installed on a cutting disc or a length of the blade that cannot extend from the cutting disc.

Considering that a manufacturing difficulty is high when a blade thickness is too thick, therefore, a blade should not be too thick, in some embodiments, the blade thickness is less than or equal to 5mm. Further, the blade thickness is less than or equal to 2mm. Considering that a risk of blade breakage also increases when the blade thickness is too thin, therefore, the blade should not be too thin, in some embodiments, the blade thickness is greater than or equal to 0.5mm. Further, the blade thickness is greater than or equal to 0.9 mm.

From the above, it can be known that a blade cannot be made too thin nor too thick, therefore, in some embodiments, a blade thickness is greater than or equal to 0.5mm, and less than or equal to 5mm. Further, the blade thickness is greater than or equal to 0.5mm, and less than or equal to 2mm. In some embodiments, the blade thickness is greater than or equal to 0.9 mm, and less than or equal to 5mm. Further, the blade thickness is greater than or equal to 0.9 mm, and less than or equal to 2mm.

In summary, for example, a blade thickness may be selected as 0.6mm, 0.9 mm, 1.2mm, etc.

It should be noted that, in other embodiments, in order to reduce a risk of blade breakage, on the other hand, a difference between a hardness of a blade body and a hardness of a cutting portion may also be set to be relatively large, and a difference between the two is controlled within a certain range, in other words, a hardness of the blade body is set smaller to meet a high toughness requirement of a base under a high linear velocity, and a hardness of the cutting portion is set larger to meet a high wear-resistance requirement of a lawn mowing operation under the high linear velocity. For example, when a linear velocity of a blade is greater than or equal to 30m/s, a difference between the hardness of the blade body and the hardness of the cutting portion is controlled at 40-80HRC; further, the difference between the hardness of the blade body and the hardness of the cutting portion is controlled at 50-80HRC; wherein the hardness of the blade body is less than the hardness of the cutting portion. Such a setting method can prevent a blade breakage when the blade is impacted by a hard object, especially at a connection between the blade body and the cutting portion.

In order to improve a cutting efficiency, a travel speed of a lawn mower usually needs to be increased or raised, and when the travel speed becomes faster, a grass volume per unit area increases, in order to also cut the increased grass volume, a requirement for a cutting quality is therefore raised, therefore, in order to adapt to the cutting quality requirement when the travel speed becomes faster, in some embodiments, a kinetic energy of a blade may be increased, and an improvement of a blade kinetic energy may be achieved, for example, by increasing a blade rotation speed, increasing a blade size, or increasing a blade linear velocity, which leads to a probability of a blade breakage during a collision. Of course, a cutting quality requirement of the lawn mower where the linear velocity needs to be adaptively increased due to another factor (such as a larger blade size, a multi-layer blade) can also be adapted.

That is to say, when a travel speed increases, a risk of blade breakage usually increases, therefore, how to reduce a blade breakage problem caused by the increased travel speed has become one of urgent issues to be solved for a lawn mower, especially a large lawn mower in a commercial scenario (such as a riding lawn mower).

An applicant found that while a travel speed increases, in order to reduce a risk of blade breakage, in a first aspect, a blade thickness may be increased, but considering that a manufacturing difficulty is high due to an excessively thick blade, the blade thickness should not be too thick.

It should be noted that the thicker a blade is, the harder a blade body hardness can be, but an existing process cannot achieve an excessively thick blade thickness.

In a second aspect, an effective length of a blade may be shortened, but considering that grass cannot be cut when the effective length of the blade is too short, the effective length of the blade should not be too short.

That is to say, the shorter a length of a blade extending from a cutting disc is, the less likely the blade is to break, but when the length of the blade extending from the cutting disc is too short, grass cannot be cut, and a cutting quality decreases.

In a third aspect, a hardness of a blade may be addressed by improving a blade body, for example, making the blade body soft, that is, reducing a hardness of the blade body so that the blade body has a better toughness; or simultaneously improving a hardness of the blade body and a hardness of a cutting portion, for example, reducing the hardness of the blade body and increasing the hardness of the cutting portion, so that the blade can meet both a toughness and a wear-resistance requirement.

It should be noted that, in other embodiments, a force of a cutting portion may also be released to a blade body by increasing a difference in hardness between the blade body and the cutting portion.

However, the applicant considered problems existing in solving a blade breakage through the first aspect and the second aspect, therefore, the applicant mainly addresses a blade breakage problem caused by an increased linear velocity through the third aspect.

That is to say, the present application, given that when a travel speed increases, but a blade thickness cannot be too thick and a length of a blade extending from a cutting disc cannot be too short, reduces a risk of blade breakage by reducing a hardness of a blade body.

It should be noted that, in other embodiments, when a travel speed increases, a risk of blade breakage may also be reduced by increasing a difference in hardness between a blade body and a cutting portion.

The following provides a detailed description of a requirement for a blade body hardness and a requirement for a cutting portion hardness when a travel speed increases:
In some embodiments, when a travel speed of a blade is greater than or equal to a set value, wherein the set value is 0.8m/s; on one hand, a hardness of the blade may be made softer by controlling a hardness of a blade body, for example, when the travel speed of the blade is greater than or equal to 1m/s, the hardness of the blade body is controlled to be below 45HRC; that is, the hardness of the blade body is less than or equal to 45HRC. Further, when the travel speed of the blade is greater than or equal to 1m/s, the hardness of the blade body is less than or equal to 30HRC. Further, when the travel speed of the blade is greater than or equal to 1m/s, the hardness of the blade body is less than or equal to 25HRC. For another example, when the travel speed of the blade is greater than or equal to 1.5m/s, the hardness of the blade body is controlled to be below 45HRC; that is, the hardness of the blade body is less than or equal to 45HRC. Further, when the travel speed of the blade is greater than or equal to 1.5m/s, the hardness of the blade body is less than or equal to 30HRC. Further, when the travel speed of the blade is greater than or equal to 1.5m/s, the hardness of the blade body is less than or equal to 25HRC.

Considering that a blade body is prone to bending when a hardness of the blade body is too small, therefore, the hardness of the blade body should not be too small, for example, in some embodiments, when a travel speed of a blade is greater than or equal to 1m/s, the hardness of the blade body is greater than or equal to 5HRC. Further, when the travel speed of the blade is greater than or equal to 1m/s, the hardness of the blade body is greater than or equal to 10HRC. For another example, in some embodiments, when the travel speed of the blade is greater than or equal to 1.5m/s, the hardness of the blade body is greater than or equal to 5HRC. Further, when the travel speed of the blade is greater than or equal to 1.5m/s, the hardness of the blade body is greater than or equal to 10HRC.

From the above, it can be known that, for example, in some embodiments, when a travel speed of a blade is greater than or equal to 1m/s, a hardness of a blade body is greater than or equal to 5HRC, and less than or equal to 45HRC.

Further, when a travel speed of a blade is greater than or equal to 1m/s, a hardness of a blade body is greater than or equal to 10HRC, and less than or equal to 30HRC. For example, when the travel speed of the blade is greater than or equal to 1.5m/s, a hardness range of the blade body is 10-30 HRC.

More further, when a travel speed of a blade is greater than or equal to 1m/s, a hardness of a blade body is greater than or equal to 10HRC, and less than or equal to 25HRC. For example, when the travel speed of the blade is greater than or equal to 1.5m/s, a hardness range of the blade body is 10-25HRC.

For another example, in some embodiments, when a travel speed of a blade is greater than or equal to 1.5m/s, a hardness of a blade body is greater than or equal to 5HRC, and less than or equal to 45HRC.

Further, when a travel speed of a blade is greater than or equal to 1.5m/s, a hardness of a blade body is greater than or equal to 10HRC, and less than or equal to 30HRC. For example, when the travel speed of the blade is greater than or equal to 2m/s, a hardness range of the blade body is 20-30 HRC.

More further, when a travel speed of a blade is greater than or equal to 1.5m/s, a hardness of a blade body is greater than or equal to 10HRC, and less than or equal to 25HRC. For example, when the travel speed of the blade is greater than or equal to 2m/s, a hardness range of the blade body is 10-20HRC.

Further, considering that a cutting portion is not wear-resistant if a hardness of the cutting portion is too low, and the cutting portion is limited by a process material if the hardness of the cutting portion is too high, in other words, the higher the hardness of the cutting portion, the more wear-resistant the cutting portion is, but a current process cannot achieve a very high hardness; in summary, in order to make the cutting portion meet a wear-resistance requirement, therefore, in some embodiments, the hardness of the cutting portion may be controlled to meet the wear-resistance requirement. For example, when a travel speed of a blade is greater than or equal to 1m/s, a hardness of the cutting portion is greater than or equal to 50HRC; further, when the travel speed of the blade is greater than or equal to 1m/s, the hardness of the cutting portion is greater than or equal to 55HRC; for example, when the travel speed of the blade is greater than or equal to 34m/s, the hardness of the cutting portion is greater than or equal to 55HRC. More further, when the travel speed of the blade is greater than or equal to 1m/s, the hardness of the cutting portion is greater than or equal to 60HRC. For example, when the travel speed of the blade is greater than or equal to 40m/s, the hardness of the cutting portion is greater than or equal to 60HRC.

Considering a current process limitation, a hardness of a cutting portion cannot be made very large, therefore, in some embodiments, when a travel speed of a blade is greater than or equal to 1m/s, the hardness of the cutting portion is less than or equal to 80HRC. Further, when the travel speed of the blade is greater than or equal to 1m/s, the hardness of the cutting portion is less than or equal to 75HRC. For example, when the travel speed of the blade is greater than or equal to 34m/s, the hardness of the cutting portion is less than or equal to 75HRC. More further, when the travel speed of the blade is greater than or equal to 1m/s, the hardness of the cutting portion is less than or equal to 70HRC. For example, when the travel speed of the blade is greater than or equal to 40m/s, the hardness of the cutting portion is less than or equal to 70HRC.

In summary, in some embodiments, when a travel speed of a blade is greater than or equal to 1m/s, a hardness of a cutting portion is greater than or equal to 50HRC, and less than or equal to 80HRC. For example, when the travel speed of the blade is 1m/s, a hardness of a blade body is 60-70 HRC.

In some embodiments, when a travel speed of a blade is greater than or equal to 1 m/s, a hardness of a cutting portion is greater than or equal to 55HRC, and less than or equal to 75HRC. For example, when the travel speed of the blade is greater than or equal to 1.5m/s, the hardness of the cutting portion is 60-70 HRC.

In some embodiments, when a travel speed of a blade is greater than or equal to 1 m/s, a hardness of a cutting portion is greater than or equal to 60HRC, and less than or equal to 70HRC. For example, when the travel speed of the blade is equal to 1.5m/s, the hardness of the cutting portion is 60-70 HRC. For another example, when the travel speed of the blade is equal to 2m/s, the hardness of the cutting portion is 60-70 HRC.

In some embodiments, in order to meet a toughness requirement of the blade body and a wear-resistance requirement of the cutting portion, a hardness of the blade body and a hardness of the cutting portion may be controlled; for example, when the travel speed of the blade is greater than or equal to 1 m/s, the hardness of the blade body is 5-45 HRC, and the hardness of the cutting portion is 50 and above. For another example, when the travel speed of the blade is greater than or equal to 1 m/s, the hardness of the blade body is 10-30 HRC, and the hardness of the cutting portion is 55 and above. For another example, when the travel speed of the blade is greater than or equal to 1 m/s, the hardness of the blade body is 10-25 HRC, and the hardness of the cutting portion is 60 and above.

Considering a current process limitation, the hardness of the cutting portion cannot be made very large, therefore, in some embodiments, for example, when the travel speed of the blade is greater than or equal to 1 m/s, the hardness of the blade body is 5-45 HRC, and the hardness of the cutting portion is 50-80 HRC. For another example, when the travel speed of the blade is greater than or equal to 1 m/s, the hardness of the blade body is 10-30 HRC, and the hardness of the cutting portion is 55-75 HRC. For another example, when the travel speed of the blade is greater than or equal to 1 m/s, the hardness of the blade body is 10-25 HRC, and the hardness of the cutting portion is 60-70 HRC.

In summary, in some embodiments, when the travel speed of the blade is greater than or equal to 1 m/s and less than or equal to 70 m/s, the hardness of the blade body is greater than or equal to 5 HRC and less than or equal to 45 HRC; and the hardness of the cutting portion is greater than or equal to 50 HRC and less than or equal to 80 HRC. For example, when the travel speed of the blade is 1 m/s, the hardness of the blade body is 40 HRC, and the hardness of the blade body is 60-70 HRC.

In some embodiments, when the travel speed of the blade is greater than or equal to 1 m/s, the hardness of the blade body is greater than or equal to 10 HRC and less than or equal to 30 HRC; and the hardness of the cutting portion is greater than or equal to 55 HRC and less than or equal to 75 HRC. For example, when the travel speed of the blade is equal to 1.5 m/s, the hardness of the blade body is 20-30 HRC; and the hardness of the cutting portion is 60-70 HRC. For another example, when the travel speed of the blade is greater than or equal to 2 m/s, the hardness of the blade body is 20-30 HRC; and the hardness of the cutting portion is 60-70 HRC; in an example, when the travel speed of the blade is equal to 2 m/s, the hardness of the blade body is 20-30 HRC; and the hardness of the cutting portion is 60-70 HRC.

In some embodiments, when the travel speed of the blade is greater than or equal to 1 m/s, the hardness of the blade body is greater than or equal to 10 HRC and less than or equal to 25 HRC; and the hardness of the cutting portion is greater than or equal to 60 HRC and less than or equal to 70 HRC. For example, when the travel speed of the blade is greater than or equal to 2 m/s, the hardness of the blade body is 10-20 HRC; and the hardness of the cutting portion is 60-70 HRC; in an example, when the travel speed of the blade is equal to 2 m/s, the hardness of the blade body is 10-20 HRC; and the hardness of the cutting portion is 60-70 HRC.

Considering that the blade is disposed on the cutting disc, a length of the blade extending from the cutting disc (referred to as an effective length of the blade) affects a mowing efficiency, in other words, in order to improve the mowing efficiency, the effective length of the blade may be increased, when the effective length of the blade is too short, grass cannot be cut, a mowing quality decreases or a mowing effect is poor. Therefore, the effective length of the blade cannot be too short, for example, in some embodiments, the effective length of the blade is greater than or equal to 5 mm. Considering that for a large-volume lawn mower, for example a commercial lawn mower, a cutting efficiency and a cutting quality requirement are high, therefore an effective length requirement of the blade is higher, therefore, in some embodiments, the effective length of the blade is greater than or equal to 30 mm.

Considering that the length of the blade extending from the cutting disc (referred to as the effective length of the blade) is prone to breakage when too long, therefore, the effective length of the blade cannot be too long, for example, in some embodiments, the effective length of the blade is less than or equal to 70 mm.

In summary, in some embodiments, the effective length of the blade is greater than or equal to 5 mm and less than or equal to 70 mm. Further, the effective length of the blade is greater than or equal to 30 mm and less than or equal to 70 mm.

Note that, in order to improve the mowing quality or the mowing effect, a multi-blade may be adopted, that is, an improvement of the mowing quality is achieved through a multiple cutting. Therefore, in some embodiments, for a same blade effective length, a cutting quality of the lawn mower using the multi-blade is greater than a cutting quality of the lawn mower using a single blade. For example, the effective length of the blade is 5 or 6 mm, a number of the blade is selected as 5-6 pieces, to improve the cutting quality.

Note that, considering that the blade is disposed on the cutting disc, and a linear velocity of the blade is also related to the effective length of the blade, that is to say, the effective length of the blade also affects the linear velocity. For example, for a same rotation speed, the longer the effective length of the blade is, the greater the linear velocity of the blade is; therefore, in order to increase the linear velocity, an increase may also be achieved by increasing the effective length of the blade. Considering that the grass cannot be cut when the linear velocity is too small, which in turn affects the cutting efficiency. Therefore, the effective length of the blade should not be too small, in some embodiments, the effective length of the blade is greater than 5 mm. Considering that the linear velocity is too large, the blade is prone to breakage, therefore, the effective length of the blade should not be too large, in some embodiments, the effective length of the blade is less than or equal to 70 mm. Considering that for the large-volume lawn mower, the cutting efficiency and the cutting quality requirement are high, therefore the effective length requirement of the blade is higher, therefore, in some embodiments, the effective length of the blade is greater than or equal to 30 mm.

In summary, in some embodiments, the effective length of the blade is greater than or equal to 5 mm and less than or equal to 70 mm. Further, the effective length of the blade is greater than or equal to 30 mm and less than or equal to 70 mm.

And in order to adapt to an increased risk of blade breakage that a longer blade (for the lawn mower with a high requirement for the cutting efficiency and the cutting quality) may bring, therefore, in some embodiments, the hardness of the blade body should be softer. For example, a hardness of the blade body when the effective length of the blade is equal to 30 mm is less than a hardness of the blade body when the effective length of the blade is equal to 5 mm. In other words, the longer the effective length of the blade, the smaller the hardness of the blade body.

For example, in some embodiments, when the effective length of the blade is greater than or equal to 5 mm and less than or equal to 70 mm, the hardness of the blade body is greater than or equal to 10 HRC and less than or equal to 30 HRC. And when the effective length of the blade is greater than or equal to 30 mm and less than or equal to 70 mm, the hardness of the blade body is greater than or equal to 10 HRC and less than or equal to 25 HRC.

Further considering the lawn mower with a higher cutting quality requirement, the effective length of the blade is relatively larger.

Therefore, in some embodiments, when the travel speed of the blade is greater than or equal to 1.5 m/s, and the effective length of the blade is greater than or equal to 5 mm and less than or equal to 70 mm, the hardness of the blade body is greater than or equal to 10 HRC and less than or equal to 30 HRC; and when the linear velocity of the blade is greater than or equal to 1.5 m/s, and the effective length of the blade is greater than or equal to 30 mm and less than or equal to 70 mm, the hardness of the blade body is greater than or equal to 10 HRC and less than or equal to 25 HRC.

For another example, when the travel speed of the blade is greater than or equal to 2 m/s, and the effective length of the blade is greater than or equal to 5 mm and less than or equal to 70 mm, the hardness of the blade body is greater than or equal to 10 HRC and less than or equal to 30 HRC; and when the linear velocity of the blade is greater than or equal to 2 m/s, and the effective length of the blade is greater than or equal to 30 mm and less than or equal to 70 mm, the hardness of the blade body is greater than or equal to 10 HRC and less than or equal to 25 HRC;

For example, when the travel speed of the blade is equal to 2 m/s, the effective length of the blade is equal to 15 mm, and the hardness of the blade body is 20-30 HRC. And when the linear velocity of the blade is equal to 2 m/s, the effective length of the blade is 30 mm and above, and the hardness of the blade body is 10-20 HRC. For example, in an example, when the linear velocity of the blade is equal to 2 m/s, the effective length of the blade is 50 mm-60 mm, and the hardness of the blade body is 10-20 HRC. Note that the effective length of the blade being 50 mm-60 mm is to cover a multi-layer blade, for example, an effective length of a bottommost layer blade is 50 mm, and an effective length of a topmost layer blade is 60 mm.

Note that an overall length of the blade is equal to a sum of the effective length of the blade and a blade installation length, in some embodiments the blade installation length is usually in a range of 10-15 mm. Therefore, the overall length of the blade is equal to the effective length of the blade plus (10-15) mm; and the blade installation length refers to, for example, a length of the blade installed on the cutting disc or a length of the blade that cannot extend from the cutting disc.

Considering that a manufacturing difficulty is high when a blade thickness is too thick, therefore, the blade should not be too thick, in some embodiments, the blade thickness is less than or equal to 5 mm. Further, the blade thickness is less than or equal to 2 mm. Considering that a risk of blade breakage also increases when the blade thickness is too thin, therefore, the blade should not be too thin, in some embodiments, the blade thickness is greater than or equal to 0.5 mm. Further, the blade thickness is greater than or equal to 0.9 mm.

From the above, the blade cannot be made too thin nor too thick, therefore, in some embodiments, the blade thickness is greater than or equal to 0.5 mm and less than or equal to 5 mm. Further, the blade thickness is greater than or equal to 0.5 mm and less than or equal to 2 mm. In some embodiments, the blade thickness is greater than or equal to 0.9 mm and less than or equal to 5 mm. Further, the blade thickness is greater than or equal to 0.9 mm and less than or equal to 2 mm.

In summary, for example, the blade thickness may be selected as 0.6 mm, 0.9 mm, 1.2 mm, etc.

Considering that the linear velocity is related to the travel speed, the travel speed increases, the linear velocity improves, a description of the two and a point not described in an embodiment may all refer to a previous discussion, and are not described here.

A power tool such as the lawn mower, the blade used needs to satisfy that the blade body has a high toughness while an edge portion also has a good wear-resistance. In some embodiments, a solution to meet an above requirement is to set the blade body and the cutting portion to two hardnesses, that is, the hardness of the blade body is less than the hardness of the cutting portion. However, with an increasingly high requirement of a consumer for a lawn mower use, in order to meet a high cutting quality requirement, the linear velocity of the blade during a cutting is increased when using the lawn mower. And while the linear velocity is increased, in order to meet the toughness requirement of the blade body and the wear-resistance requirement of the cutting portion, a difference between the hardness of the blade body and the hardness of the cutting portion is set to be relatively large. That is, the hardness of the blade body is set smaller, to meet a high toughness requirement of a base under a high linear velocity, and the hardness of the cutting portion is set larger, to meet a high wear-resistance requirement of a mowing operation under the high linear velocity. To prevent a situation where the blade is prone to breakage when the blade receives an impact from a hard object, especially at a connection between the blade body and the cutting portion. Based on an above issue, the present application provides a blade solution to solve an above problem, as detailed in following embodiments.

As shown in FIG. 1 to FIG. 4, an embodiment of the present application provides a blade 1, comprising a blade body 11 for connecting with the cutting disc, and a cutting portion 12 connected with the blade body 11 for performing a mowing work. A hardness of the blade body 11 is less than a hardness of the cutting portion 12, and the blade body 11 comprises at least two regions with different hardnesses, the cutting portion 12 comprises at least two regions with different hardnesses.

The blade of the present application, by setting the blade body 11 to have at least two regions with different hardnesses, and the cutting portion 12 to have at least two regions with different hardnesses, makes a force of a region with a greater hardness able to release force to a region with a smaller hardness when the blade 1 receives a relatively large impact force, helps the blade 1 to timely transfer and eliminate an impact force received by the blade 1 inside the blade 1, and reduces the risk of blade breakage of the blade 1.

In an embodiment, a hardness value range of the cutting portion 12 may be in [55 HRC, 80 HRC], a setting of a high hardness cutting portion improves a wear-resistance of the blade 1, increases a service life of the blade 1, and makes the blade 1 used for a longer time before becoming dull. And HRC is a hardness unit ROCKWELL, that is, a Rockwell hardness. And a setting of the hardness range of the cutting portion 12 of the present application only needs to meet a wear-resistance usage requirement of the cutting portion 12. Generally, within a certain range, the greater the hardness, the stronger the wear-resistance of the cutting portion 12. And selecting the hardness of the cutting portion 12 in a range of 55-80 HRC not only meets the wear-resistance usage requirement of the cutting portion 12, but also avoids a relatively large manufacturing difficulty of the cutting portion 12 due to an excessively high hardness, leading to a relatively high manufacturing and usage cost of the blade 1. Specifically, the hardness of the cutting portion 12 may be 55 HRC, 65 HRC, 75 HRC or 80 HRC, etc.

In an embodiment, the linear velocity of the blade 1 is greater than or equal to 35 m/s. The blade 1 of the present application can meet a high toughness and a high wear-resistance requirement under a linear velocity intensity requirement, and simultaneously greatly improves an efficiency of the blade 1 cutting the grass. Specifically, the linear velocity of the blade 1 may be 35 m/s, 40 m/s or 45 m/s, etc.

In an embodiment, a hardness value range of the blade body 11 may be in [10 HRC-35 HRC], a low hardness blade body 11 has a relatively high toughness, improves an impact resistance performance of the blade 1, and makes the blade body 11 able to utilize a toughness of the blade body 11 to play a buffering role against an impact force received when the blade 1 hits a hard object such as a stone, and further effectively prevents the blade 1 from breaking. Specifically, the hardness of the blade body 11 may be 10 HRC, 15 HRC, 25 HRC or 35 HRC, etc.

Please simultaneously refer to FIG. 4, in a preferred embodiment, the blade body 11 comprises a first hardness region 112 and a second hardness region 113, the first hardness region 112 is located on an outer side of the blade body 11, the second hardness region 113 is located on an inner side of the blade body 11, and a hardness of the first hardness region 112 is greater than a hardness of the second hardness region 113. And setting the blade body 11 as two hardness regions, the hardness of the first hardness region 112 is set relatively large, which is beneficial for the first hardness region 112 to cut the grass, and the hardness of the second hardness region 113 is set smaller than the first hardness region 112, which is beneficial for the first hardness region 112 to transfer an impact force received when cutting the grass to the second hardness region 113, helps the first hardness region 112 release a force, and can effectively prevent a breakage of the blade 1.

In an embodiment, an area of the first hardness region 112 is less than an area of the second hardness region 113, setting an area of a smaller hardness region to be larger improves a force releasing effect of a harder region. In another embodiment, the area of the first hardness region 112 may also be set to be greater than or equal to the area of the second hardness region 113.

In another embodiment, the blade body 11 may also comprise another one or multiple regions with different hardnesses besides the first hardness region 112 and the second hardness region 113. Within a certain range, the more hardness regions the blade body 11 is divided into, the better a force releasing effect against the impact force received by the blade 1. However, the more regions with different hardnesses the blade body 11 is divided into, the higher a manufacturing cost of the blade 1, and different usage environments have different requirements for a number of hardness region divisions of the blade 1, the number of the different hardness regions of the blade body 11 may be set according to a usage condition.

Please simultaneously refer to FIG. 4, in a preferred embodiment, the cutting portion 12 comprises a third hardness region 121 and a fourth hardness region 122, the third hardness region 121 is located on an outer side of the cutting portion 12, the fourth hardness region 122 is located on an inner side of the cutting portion 12, and a hardness of the third hardness region 121 is greater than a hardness of the fourth hardness region 122. Setting the hardness of the fourth hardness region 122 to be less than the hardness of the third hardness region 121 is beneficial for the third hardness region 121 to transfer an impact force received by the third hardness region 121 to the fourth hardness region 122, helps the third hardness region 121 release a force, and can effectively prevent the blade 1 from breaking.

In an embodiment, an area of the third hardness region 121 is less than an area of the fourth hardness region 122, setting the area of the smaller hardness region to be larger improves a force releasing effect of the harder region. In another embodiment, the area of the third hardness region 121 may also be set to be greater than or equal to the area of the fourth hardness region 122.

In another embodiment, the cutting portion 12 may also comprise another one or multiple regions with different hardnesses besides the third hardness region 121 and the fourth hardness region 122. Within a certain range, the more hardness regions the cutting portion 12 is divided into, the better the force releasing effect against the impact force received by the blade 1. And the more regions with different hardnesses the cutting portion 12 is divided into, the higher the manufacturing cost of the blade 1, and different usage environments have different requirements for the number of hardness region divisions of the blade 1, the number of the different hardness regions of the cutting portion 12 may be set according to the usage condition.

In an embodiment, the number of the different hardness regions of the blade body 11 is greater than the number of the different hardness regions of the cutting portion 12. Generally, an area of the blade body 11 is greater than an area of the cutting portion 12, making the blade body 11 more convenient than the cutting portion 12 for dividing into more regions with different hardnesses. A setting of more different hardness regions on the blade body 11 makes a force releasing effect of the blade 1 better.

In another embodiment, the number of the different hardness regions of the blade body 11 may be equal to or less than the number of the different hardness regions of the cutting portion 12.

Please refer to FIG. 5, note that the outer side and the inner side described in the present application are based on the blade 1 as a whole, a setting direction towards an edge of the blade 1 is the outer side, and a setting direction towards an interior of the blade 1 is the inner side.

In an embodiment, a width value range of the cutting portion 12 is in [0.1 mm, 5 mm]. A setting of a width of the cutting portion 12 only needs to ensure a cutting requirement of the cutting portion 12, and ensure that the cutting portion 12 can be reliably connected with the blade body 11, so that a production cost of the blade 1 can be greatly reduced under a premise of ensuring a wear-resistance strength of the blade 1. Specifically, the width of the cutting portion may be taken as 0.1 mm, 1 mm, 2 mm or 5 mm, etc.

In an embodiment, the blade 1 is made of a whole piece of plate material, by performing different degrees of hardening treatments such as a laser quenching, an edge carburizing or an induction quenching on the blade body 11 and the cutting portion 12, the blade body 11 and the cutting portion 12 respectively having the different hardness regions are obtained, to meet a high toughness requirement of the blade body 11 and simultaneously meet a high wear-resistance usage requirement of the cutting portion 12.

In some embodiments, the blade 1 may make a crystal grain of a metal of the blade body 11 more dense through a tempering treatment on a whole piece of plate material, making an impact resistance performance of the blade body 11 better; the cutting portion is hardened by adopting a laser quenching process method on an edge, thereby obtaining the blade 1 with the hardness of the cutting portion higher than the blade body 11. Of course, in other embodiments, the laser quenching may also be replaced by other process methods, such as the edge carburizing, the induction quenching, etc.

In another embodiment, the blade body 11 may be set as an integral whole having different hardness regions, the cutting portion 12 is set as a plurality of components having different hardnesses, the plurality of components of the cutting portion 12 with different hardness materials are fixedly connected and then connected with the blade body 11. The design is helpful for an interior of the blade 1 to perform a force release. In another embodiment, the blade body 11 may also be set as a plurality of components having different hardnesses, the cutting portion 12 is set as an integral whole having different hardness regions, the plurality of components of the blade body 11 with different hardnesses are fixedly connected and then connected with the blade body 11. The design is also helpful for the interior of the blade 1 to perform a force release.

In another embodiment, the different hardness regions of the blade body 11 are made of different materials, and the different hardness regions of the cutting portion 12 are also made of different materials. The blade body 11 and the cutting portion 12 may be directly formed into an integral whole during a molding, forming a plurality of connected components with different hardnesses. Furthermore, the cutting portion 12 and the blade body 11 may also be separately formed, forming a plurality of components with different hardnesses, and then the plurality of components with different hardnesses are fixedly connected together. In an embodiment, the plurality of components with different hardnesses of the cutting portion 12 and the plurality of components with different hardnesses of the blade body 11 are separately formed, and then the above-mentioned plurality of components are fixedly connected together by a method such as a welding.

Note that the components with different hardnesses of the cutting portion are connected into an integral whole, the plurality of components with different hardnesses of the blade body are connected into an integral whole; finally, the cutting portion connected into the integral whole and the blade body connected into the integral whole are connected again, a method of an above connection may adopt a same method, for example, the welding, an adhesive connection, a self-clinching fastener connection, etc., which is not described in detail in an embodiment. Of course, in other embodiments, the method of the above connection may also adopt different connection methods, in other words, a connection method of the components with different hardnesses of the cutting portion, a connection method of the plurality of components with different hardnesses of the blade body, and a connection method of the cutting portion connected into the integral whole and the blade body connected into the integral whole, at least two different connection methods exist among three connection methods; for example, A when there are two connection methods, 1) the connection method of the components with different hardnesses of the cutting portion and the connection method of the plurality of components with different hardnesses of the blade body adopt a first connection method, and a connection method between the cutting portion and the blade body is different from the connection method of the components with different hardnesses of the cutting portion, that is to say, the connection method of the cutting portion and the blade body adopts a second connection method, the second connection method is different from the first connection method; 2) the connection method of the components with different hardnesses of the cutting portion, and the connection method of the cutting portion and the blade body adopt the first connection method, and the connection method of the plurality of components with different hardnesses of the blade body is different from the connection method of the components with different hardnesses of the cutting portion, that is to say, the connection method of the plurality of components with different hardnesses of the blade body adopts the second connection method, the second connection method is different from the first connection method; 3) the connection method of the components with different hardnesses of the cutting portion adopts the first connection method, and the connection method of the cutting portion and the blade body, and the connection method of the plurality of components with different hardnesses of the blade body adopt a connection method different from the connection method of the components with different hardnesses of the cutting portion, that is to say, the connection method of the plurality of components with different hardnesses of the blade body, and the connection method of the cutting portion and the blade body both adopt the second connection method, the second connection method is different from the first connection method. The above first connection method for example adopts the welding, the second connection method for example adopts the adhesive connection or the self-clinching fastener connection; or, the first connection method for example adopts the adhesive connection, the second connection method for example adopts the welding or the self-clinching fastener connection; or, the first connection method for example adopts the self-clinching fastener connection, the second connection method for example adopts the welding or the adhesive connection.

When three connection methods exist, that is, the connection method of the components with different hardnesses of the cutting portion is different from the connection method of the plurality of components with different hardnesses of the blade body, the connection method of the plurality of components with different hardnesses of the blade body is different from the connection method between the cutting portion and the blade body, and the connection method between the cutting portion and the blade body is different from the connection method of the components with different hardnesses of the cutting portion, that is to say, the connection method of the components with different hardnesses of the cutting portion adopts the first connection method, the connection method of the plurality of components with different hardnesses of the blade body adopts the second connection method, the connection method between the cutting portion and the blade body adopts a third connection method, three connection methods are all different. For example, the first connection method for example adopts the welding, the second connection method adopts one of the adhesive connection and the self-clinching fastener connection, the third connection method adopts another one of the adhesive connection and the self-clinching fastener connection; for another example, the first connection method adopts the adhesive connection, the second connection method adopts one of the welding and the self-clinching fastener connection, the third connection method adopts another one of the welding and the self-clinching fastener connection; for another example, the first connection method adopts the self-clinching fastener connection, the second connection method adopts one of the welding and the adhesive connection, the third connection method adopts another one of the welding and the adhesive connection;

A connection between the cutting portion and the blade body adopts a method of the welding, and a connection of the components with different hardnesses of the cutting portion (and/or the blade body) adopts a method of the adhesive (or the self-clinching fastener) connection.
2. A connection between the cutting portion and the blade body adopts a method of the welding, and a connection of the components with different hardnesses of the cutting portion (and/or the blade body) adopts a method of the adhesive (or the self-clinching fastener) connection.

As shown in FIG. 5, in an embodiment, one end of the blade body 11 is provided with a rotating shaft installation hole 111 for installing a rotating shaft 211, a hardness of the rotating shaft 211 is greater than the hardness of the blade body 11. An arrangement can reduce a wear of the rotating shaft 211, and in a long-term use process, can reduce a wear between the rotating shaft 211 and the blade body 11, and further reduce a frequency of changing the blade 1. Generally, since the cutting portion 12 wears greatly during the mowing operation, before the cutting portion 12 wears out and cannot work, a situation of replacing the blade 1 solely due to the wear between the rotating shaft 211 and the blade body 11 basically does not occur.

As shown in FIG. 1, in an embodiment, the blade 1 of the present application further comprises a dulling zone 13 for gripping the blade body 11, the dulling zone 13 is disposed on the blade body 11 at an end close to the rotating shaft installation hole 111. The dulling zone 13 is not provided with an edge like the cutting portion 12, in order to facilitate an operator to hold the dulling zone 13 to perform a replacement or a maintenance of the blade 1.

As shown in FIG. 5, another embodiment of the present application further provides the lawn mower 2, comprising a body 22, a cutting disc 21 and a blade assembly; and the cutting disc 21 is disposed on the body 22, the blade assembly is connected to the cutting disc 21 and follows the cutting disc 21 to rotate together to perform the mowing operation, the blade assembly comprises at least two blades 1 as in the above embodiments.

The lawn mower 2 in an embodiment, by setting the blade body 11 to have at least two regions with different hardnesses, and the cutting portion 12 to have at least two regions with different hardnesses, makes a force of a region with a greater hardness able to release force to a region with a smaller hardness when the blade 1 receives a relatively large impact force, helps the blade 1 to timely transfer and eliminate the impact force received inside the blade 1, and reduces the risk of blade breakage of the blade 1.

As shown in FIG. 5, in a preferred embodiment, the blade 1 on the lawn mower 2 of the present application is provided with a plurality, the plurality of blades 1 are disposed layer by layer from top to bottom on the cutting disc 21, showing a stepped distribution. That is, a diameter of a cutting trajectory of a blade 1 located above is greater than a diameter of a cutting trajectory located below. Due to the larger diameter, in a cutting process, the blade 1 located above will contact grass first to perform a cutting on an upper end of the grass; a blade 1 located in a middle of the cutting disc 21 subsequently performs a cutting on the grass; a blade 1 located below then performs a cutting on a part of the grass close to a ground, thereby ensuring a long grass is cut more broken. And, under a circumstance of ensuring the grass can be cut broken enough, a certain distance is spaced between two adjacent blades 1, a distance is generally 10-20 mm, to prevent adjacent blades 1 from colliding with each other and causing a damage to the blade 1. Preferably, a number of the blades 1 may be 3, 5, 6 or 8, etc.

Note that the above has described some embodiments of the present application. Other embodiments are within a scope of an appended claims. In some cases, an action or a step described in the claims may be executed in an order different from the above embodiments and still can achieve a desired result. In addition, a process depicted in the drawings does not necessarily require a shown specific order or a continuous order to achieve a desired result.

A person of ordinary skill in an art should understand: a discussion of any above embodiment is only exemplary, and is not intended to imply a scope of the present application (including the claims) is limited to the examples; under an idea of the present application, a technical feature in the above embodiments or different embodiments may also be combined, a step may be realized in an arbitrary order, and many other variations of different aspects of the embodiments of the present application exist as described above, and the variations are not provided in detail for conciseness.

An embodiment of the present application is intended to cover all such replacements, modifications and variations falling within a broad scope of the appended claims. Therefore, any omission, modification, equivalent replacement, improvement, etc. made within a spirit and a principle of the embodiments of the present application shall be included in a protection scope of the present application.

## Claims

1. A lawn mower, wherein the lawn mower comprises:
a body;
a movement module configured to drive the lawn mower to move;
a cutting disc having at least one blade, the cutting disc rotating under driving of a cutting motor to drive the blade to rotate, the blade comprising: a blade body for connecting with the cutting disc, and a cutting portion connected with the blade body for performing a lawn mowing work;
when a travel speed is greater than or equal to 1 m/s and a linear velocity of the blade is greater than or equal to 30 m/s and less than or equal to 70 m/s, a hardness value range of the blade body is 5-45 HRC.

2. The lawn mower according to claim 1, wherein when a travel speed is greater than or equal to 1.5 m/s and a linear velocity of the blade is greater than or equal to 30 m/s and less than or equal to 70 m/s, a hardness value range of the blade body is 5-45 HRC.

3. The lawn mower according to claim 1, wherein when a travel speed is greater than or equal to 2 m/s and a linear velocity of the blade is greater than or equal to 30 m/s and less than or equal to 70 m/s, a hardness value range of the blade body is 5-45 HRC.

4. The lawn mower according to claim 1, wherein when a travel speed is greater than or equal to 1 m/s and a linear velocity of the blade is greater than or equal to 40 m/s and less than or equal to 60 m/s, a hardness value range of the blade body is 10-30 HRC.

5. The lawn mower according to claim 2, wherein when a travel speed is greater than or equal to 1.5 m/s and a linear velocity of the blade is greater than or equal to 40 m/s and less than or equal to 60 m/s, a hardness value range of the blade body is 10-30 HRC.

6. The lawn mower according to claim 3, wherein when a travel speed is greater than or equal to 2 m/s and a linear velocity of the blade is greater than or equal to 40 m/s and less than or equal to 60 m/s, a hardness value range of the blade body is 10-30 HRC.

7. The lawn mower according to claim 4, wherein when a travel speed is greater than or equal to 1 m/s and a linear velocity of the blade is greater than or equal to 40 m/s and less than or equal to 60 m/s, a hardness value range of the blade body is 10-25 HRC.

8. The lawn mower according to claim 5, wherein when a travel speed is greater than or equal to 1.5 m/s and a linear velocity of the blade is greater than or equal to 40 m/s and less than or equal to 60 m/s, a hardness value range of the blade body is 10-25 HRC.

9. The lawn mower according to claim 6, wherein when a travel speed is greater than or equal to 2 m/s and a linear velocity of the blade is greater than or equal to 40 m/s and less than or equal to 60 m/s, a hardness value range of the blade body is 10-25 HRC.

10. The lawn mower according to any one of claims 1-9, wherein a hardness of the cutting portion is greater than or equal to 50 HRC.

11. The lawn mower according to any one of claims 1-10, wherein a hardness of the cutting portion is greater than or equal to 60 HRC.

12. The lawn mower according to any one of claims 1-11, wherein a hardness of the cutting portion is less than or equal to 80 HRC.

13. The lawn mower according to any one of claims 1-12, wherein a hardness range of the cutting portion is 60-70 HRC.

14. The lawn mower according to any one of claims 1-13, wherein a length of the blade extending from the cutting disc is greater than or equal to 5 mm.

15. The lawn mower according to any one of claims 1-14, wherein a length of the blade extending from the cutting disc is 5-70 mm.

16. The lawn mower according to any one of claims 1-15, wherein a length of the blade extending from the cutting disc is 30-70 mm.

17. The lawn mower according to any one of claims 1-16, wherein a thickness of the blade is less than or equal to 5 mm.

18. The lawn mower according to any one of claims 1-17, wherein a thickness of the blade is 0.5-2 mm.

19. The lawn mower according to any one of claims 1-18, wherein a width of the cutting portion is 0.1-5 mm.

20. The lawn mower according to any one of claims 1-19, wherein a number of the at least one blade is from 3 to 6.

21. The lawn mower according to any one of claims 1-20, wherein one end of the blade body is provided with a rotating shaft mounting hole for mounting a rotating shaft, and a hardness of the rotating shaft is greater than a hardness of the blade body.
